(19)

Europäisches
Patentamt

European
Patent Office

Office européen
des brevets

(11) **EP 2 921 992 A2**

(12) **EUROPEAN PATENT APPLICATION**

(43) Date of publication:
**23.09.2015 Bulletin 2015/39**

(51) Int Cl.:
***G06K 9/00*** *(2006.01)*

(21) Application number: **15159449.6**

(22) Date of filing: **17.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.03.2014 JP 2014054598**
**11.03.2015 JP 2015048221**

(71) Applicant: **Ricoh Company, Ltd.**
**Tokyo 143-8555 (JP)**

(72) Inventors:
 • **Sekiguchi, Hiroyoshi**
  **Tokyo, 143-8555 (JP)**

 • **Yokota, Soichiro**
  **Tokyo, 143-8555 (JP)**
 • **Guan, Haike**
  **Tokyo, 143-8555 (JP)**
 • **Aoki, Shin**
  **Tokyo, 143-8555 (JP)**
 • **Yoshida, Jun**
  **Tokyo, 143-8555 (JP)**
 • **Suzuki, Shuichi**
  **Kanagawa, 222-8530 (JP)**
 • **Fujimoto, Hideomi**
  **Kanagawa, 222-8530 (JP)**
 • **Nakajima, Mitsuru**
  **Kanagawa, 222-8530 (JP)**

(74) Representative: **Schwabe - Sandmair - Marx**
**Patentanwälte**
**Stuntzstraße 16**
**81677 München (DE)**

(54) **Image processing device, drive support system, image processing method, and program**

(57)     An image processing device includes an object area extraction unit extracting an object area based on an image captured by an imaging unit; a distance information acquisition unit irradiating an electromagnetic wave to an object in an area other than an imaging area of the imaging unit and acquiring distance information indicating a distance to the object based on the electromagnetic wave reflected by the object; and an information generation unit generating predicted area information based on the distance information acquired by the distance information acquisition unit. Further, the predicted area information is used so that the object area extraction unit extracts the object area of the object when the object, which was in the area other than the image area, enters into the imaging area.

EP 2 921 992 A2

**Description**

BACKGROUND OF THE INVENTION

1. Field of the Invention

The present invention generally relates to an image processing apparatus, etc., recognizing an object from an image.

2. Description of the Related Art

There have been known various drive support systems which use analytical results of images captured by in-vehicle cameras. In this regard, for example, it is possible for an image processing device of a vehicle to recognize an object (e.g., a vehicle, a pedestrian, etc.) in front of the vehicle, so that an in-vehicle device can send a warning to the driver of the vehicle that the vehicle may get too close to the object and control a brake system so as to reduce a damage (collision). Further, for example, it is possible to recognize a pedestrian who runs into a drive lane and send a warning to the driver to watch carefully.

In order to achieve such an image analysis, it is necessary to have a technique that can accurately recognize an object. To that end, there is a known technique in which a sensor other than a camera is used support the recognition of an object (see, for example, Japanese Laid-open Patent Publication No. 2013-215804). Japanese Laid-open Patent Publication No. 2013-215804 discloses a preceding vehicle recognition device that recognizes a preceding vehicle in front of a self-vehicle based on image information from a stereo-camera and radar information using laser or millimeter waves, etc.

SUMMARY OF THE INVENTION

According to an aspect of the present invention, an image processing device includes an object area extraction unit extracting an object area based on an image captured by an imaging unit; a distance information acquisition unit irradiating an electromagnetic wave to an object in an area other than an imaging area of the imaging unit and acquiring distance information indicating a distance to the object based on the electromagnetic wave reflected by the object; and an information generation unit generating predicted area information based on the distance information acquired by the distance information acquisition unit. Further, the predicted area information is used so that the object area extraction unit extracts the object area of the object when the object, which was in the area other than the image area, enters into the imaging area.

BRIEF DESCRIPTION OF THE DRAWINGS

Other objects, features, and advantages of the present invention will become more apparent from the following description when read in conjunction with the accompanying drawings, in which:

FIGS. 1A through 1D illustrate an example problem in recognition of an object by an image forming device of related art;
FIGS. 2A and 2B schematically illustrates an example of an object recognition according to an embodiment;
FIG. 3 illustrates example mounting positions on a vehicle of a laser radar distance measurement sections and a stereo camera;
FIG. 4 schematically illustrates examples of a field angle of the stereo camera and irradiation ranges of the laser radar distance measurement sections;
FIG. 5 illustrates an example of a schematic configuration of a drive support system;
FIG. 6 is an example block diagram of the laser radar distance measurement section and the image forming device;
FIG. 7 illustrates an example of parallax calculation performed by a parallax calculation section;
FIGS. 8A and 8B illustrate an example of object recognition performed by a recognition processing section;
FIGS. 9A and 9B illustrate an example of object information detected by the laser radar distance measurement sections;
FIG. 10 schematically illustrates an example of the object information changing as time passes;
FIG. 11 illustrates an example of detecting a road surface area;
FIGS. 12A and 12B schematically illustrate an example histogram of a parallax value when an object exists;
FIG. 13 schematically illustrate an example relationship between an x coordinate of an parallax image and parallax histogram;

FIG. 14 illustrates an example straight line which is extracted when an pedestrian "A", a bicycle "B", and a vehicle "C" are imaged;

FIG. 15 illustrates an example of a predicted imaging range;

FIG. 16 illustrates an example of a predicted imaging range table in which a distance "L" is associated with the predicted imaging range;

FIG. 17 illustrates an example width of the predicted imaging range determined based on a moving speed of a vehicle and an interval of an imaging time;

FIG. 18 illustrates an example of a timing when imaging is started;

FIG. 19 illustrates an example of clustering related to the predicted imaging range;

FIG. 20 illustrates an example of clustering of an approaching object from a rear side;

FIG. 21 illustrates an example of a straight line (y · d) and a straight line (d · x) when an object approaches from the rear right side;

FIGS. 22A through 22D illustrates an example of image recognition using the predicted imaging range;

FIG. 23 is a flowchart of an example recognition process of an object performed by the recognition processing section;

FIG. 24 is a block diagram of an example configuration of the laser radar distance measurement section and the image forming device in case of a monocular camera; and

FIG. 25 illustrates an example experiment result when time periods necessary for the object recognition are measured.

## DETAILED DESCRIPTION OF THE PREFERRED EMBODIMENTS

In related technologies, in order for an image processing device to recognize an object such as a vehicle, a pedestrian, etc., it may take much time from when capturing of the image of the object is started (i.e., from when the object starts entering into the field angle) until when the object is determined as a vehicle or a pedestrian. For example, in a case of an ordinary vehicle, it takes from several tens of milliseconds to a hundred and several tens of milliseconds (i.e., several frames from when the number of frames is counted), and in a case of a large truck having a longer body, it takes several hundreds of milliseconds (i.e. ten and several frames from when the number of frames is counted). These time periods may vary depending on the performance of the image processing devices, but are too long for an in-vehicle device to support driving in real time.

For example, in a case where an object cuts in front of a self-vehicle, it is not desired if the time period, which is from when a camera starts capturing images of the object until when an in-vehicle device starts operations (e.g., automatic braking, an automatic handling operation to avoid collision, etc.), is longer than a time period until the self-vehicle gets too close to the object.

However, in related technologies (including above Japanese Laid-open Patent Publication No. 2013-215804), it is only determined that the preceding vehicle is identified when it is determined that the horizontal position of and the distance to the preceding vehicle which are imaged by a stereo camera and which are detected by a laser irradiation unit are the same as each other. Due to the mechanism, it is still difficult to reduce the time period from when the camera starts capturing images of an object until when the in-vehicle device starts the operation even if an additional sensor other than the camera is used.

The present invention is made in light of at least the above problem, and may provide an image processing device that can reduce the time period from when the camera starts capturing images of an object until when the in-vehicle device starts the operation (even) when an additional sensor other than the camera is used.

In the following, embodiments of the present inventions are described with reference to the accompanying drawings.

Inconvenience in use of an image processing device in related art

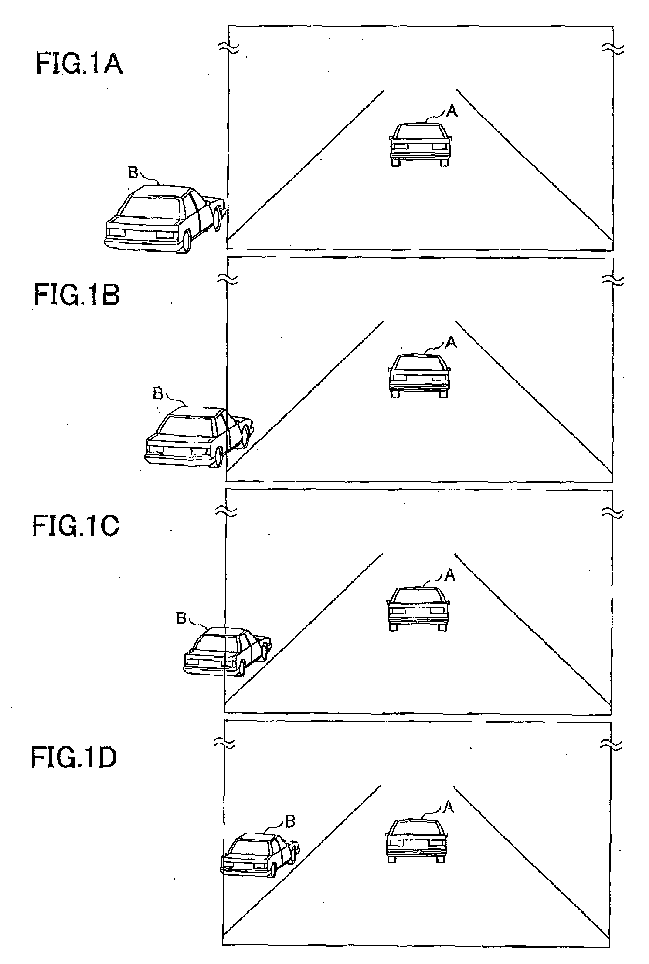

FIGS. 1A through 1D illustrate an example of an inconvenience when an image processing device recognizes an object. The frame having a rectangular shape ("rectangular frame") indicates an imaging range (field angle) of an imaging means, and from outside the rectangular frame, another vehicle "B" travels forward. In the FIGS. 1A through 1D, time passes in the order of FIG. 1A, FIG. 1B, FIG. 1C, and FIG. 1D.

In FIG. 1A, the image processing device already recognizes another vehicle "A". However, the other vehicle "B" is not imaged yet. Therefore, the image processing device does not start recognizing the other vehicle "B".

In FIG. 1B, a part of the other vehicle "B" begins to be imaged. Although the object begins to be included in the image, the image processing device begins to recognize the object. However, at this state, it is still difficult to recognize the object as a vehicle.

In FIG. 1C, most part of the other vehicle "B" is captured in the image. In this stage, it begins possible to recognize the object as a vehicle. However, the image processing device cannot recognize the object as a vehicle.

FIG. 1D indicates a state when a time of several frames has passed since the other vehicle "B" is fully captured in the image. The "frame" corresponds to one image. In this state, the image processing device can recognize the vehicle "B" as a vehicle.

However, when it is not possible to recognize the object as a vehicle until the state of FIG. ID, it is not possible for an in-vehicle device to support driving until the object is recognized as a vehicle. For example, in the state of FIG. 1B, if the other vehicle "B" suddenly changes lanes, it is difficult for the in-vehicle device of the self-vehicle to automatically put on brakes and operate the steering wheel to avoid a close approach.

To resolve the problem, an image processing device according to an embodiment of the present invention generates prediction information by using object information of the other vehicle "B" detected by a laser radar before the imaging means starts imaging the other vehicle "B". By doing this, it becomes possible to reduce the time period from when the image of the vehicle "B" is started to be captured until when the other vehicle "B" is recognized as a vehicle.

Outline of the object recognition according to an embodiment

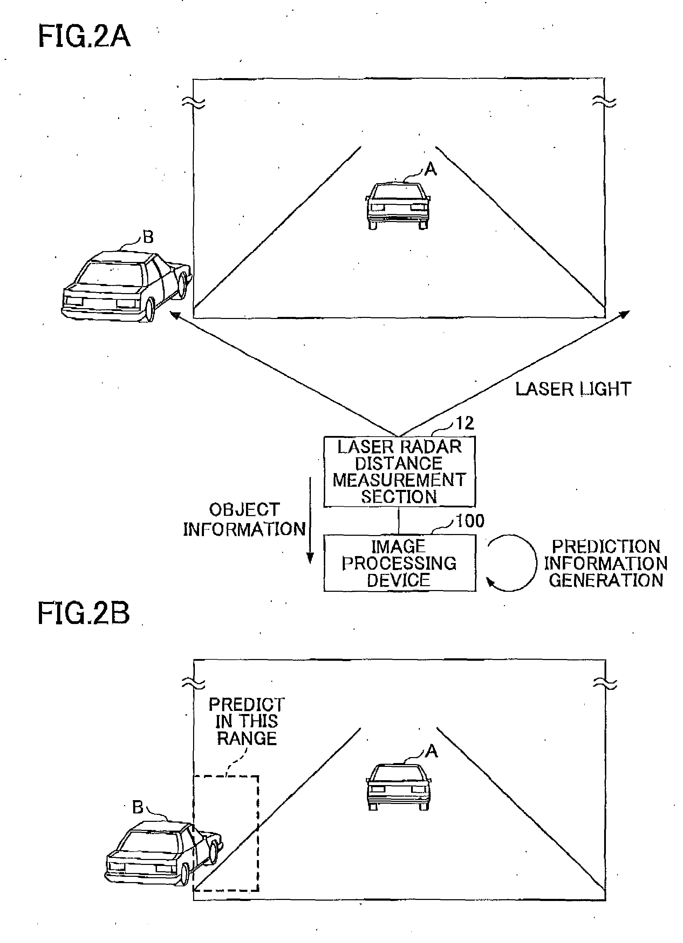

FIGS. 2A and 2B illustrate an example of an outline of the object recognition performed by an image processing device according to an embodiment. In the state of FIG. 2A, the other vehicle "B" is not captured in an image. Therefore, an image processing device 100 does not begin to recognize the other vehicle "B". However, laser radar distance measurement sections 12 scan outside the range of the field angle (angle of view) (i.e., outside of the imaging range) of the imaging means (a stereo camera described below), and detects the other vehicle "B". By the detection, object information (distance, orientation, relative speed, moving direction, etc.) can be obtained. Note that the radar light may scan in the range of the field angle.

Here, the image processing device 100 generates the prediction information to recognize the object earlier based on the object information when the imaging means starts capturing an image of a part of the other vehicle "B". The prediction information includes, for example, a range information of an image capturing the other vehicle "B", and a time period until the imaging starts.

In the state of FIG. 2B, a part of the other vehicle "B" begins to be imaged. The image processing device 100 starts recognition relative to the range where the part of the other vehicle "B" begins to be imaged based on the prediction information. The range is included in the prediction information, and is generated as the range where there is a high likelihood that the object is imaged ("predicted capture area" described below) before the imaging begins.

Therefore, it becomes easier for the image processing device 100 to recognize the object by performing recognition on the range. Further, only a part of the other vehicle "B" is imaged and the direction the other vehicle "B" enters into the field angle is known. Therefore, it is possible to recognize the object (other vehicle "B") by using an appropriate method. Further, it is possible to predict the time when imaging starts. It becomes possible to start recognition from the image when imaging starts. Accordingly, it becomes possible to reduce the time period until when the recognition of the other vehicle "B" is completed.

Here, the term "object" used in this embodiment refers to an object to be detected such as a vehicle to be used to support driving. However, in a process of detecting an object, an object other than the object to be detected to be used to support driving may also be detected. Further, the image processing device in this embodiment does not detect so-called "all objects" but does detect an object which is appropriate to be used to support driving. Therefore, the term "object" herein refers to a target to be detected or an object to be detected. Imaging means and example layout of laser radar

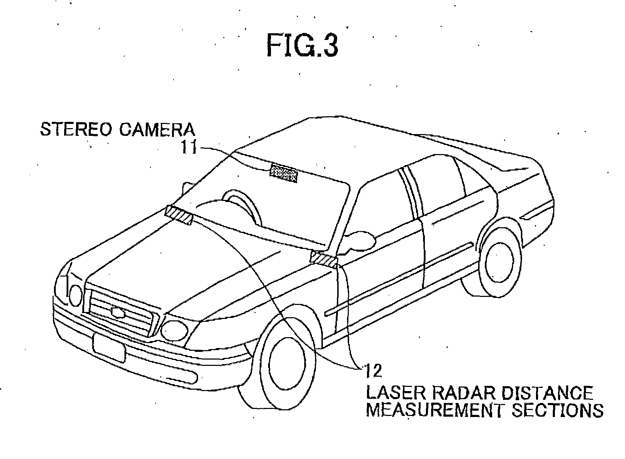

FIG. 3 illustrates an example layout (mounting position) of the laser radar distance measurement sections 12 and a stereo camera 11 in the vehicle. The laser radar distance measurement sections 12 are arranged (disposed) in respective right and left rearview mirrors (door mirrors) of the vehicle. Further, the stereo camera 11, which captures images in front of the vehicle, is arranged on the vehicle front side of the interior mirror. By arranging the laser radar distance measurement sections 12 so as to be separated from each other in the width direction of the vehicle, it becomes easier to detect an object which is not only on the front side but also on the right and left front side and on the right and left side of the vehicle.

Note that the layout position of the stereo camera 11 in FIG. 3 is an example only. For example, the stereo camera 11 may be disposed inside the front grille or inside the bumper. Further, the stereo camera 11 may be disposed in front of the roof or on the bonnet. By disposing the stereo camera 11 at an appropriate position, it becomes easier to capture an image of an object to be recognized.

Similarly, the layout positions of the laser radar distance measurement sections 12 in FIG. 3 is an example only. For example, the laser radar distance measurement sections 12 may be disposed inside the front grille or inside the bumper. Further, the laser radar distance measurement sections 12 may be disposed in front of the roof or on the bonnet.

It is not necessary for the laser radar distance measurement sections 12 to be separated into right and left (in the width direction). For example, one laser radar distance measurement section 12 may be disposed in substantially the middle in the width direction of the vehicle. By reducing the number of the layout positions, it becomes easier to reduce the cost. Further, three or more laser radar distance measurement sections 12 may be disposed. By increasing the number of the layout positions of the laser radar distance measurement sections 12, it becomes easier to detect an object in a desired direction.

Further, the stereo camera 11 and the laser radar distance measurement section 12 may be disposed at the same position. In this case, both the stereo camera 11 and the laser radar distance measurement section 12 can be accommodated in the same chassis, so as to be integrally mounted in the vehicle. By doing this, the wiring length between the stereo camera 11 and the laser radar distance measurement section 12 can become shorter and the installation becomes easier because of only one installation position.

Further, FIG. 3 illustrates a case of an ordinary vehicle. However, in a case of a van or truck having a high vehicle height, it is assumed that appropriate layout positions are selected.

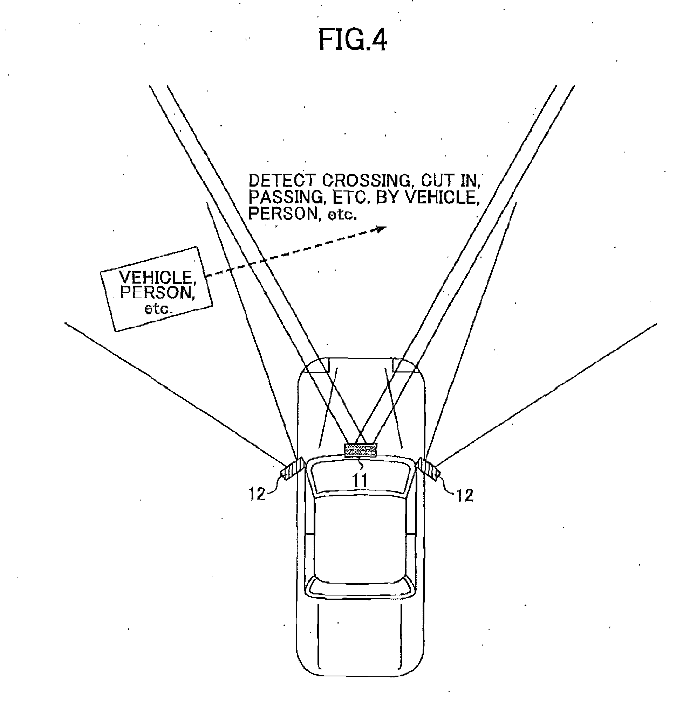

FIG. 4 schematically illustrates an example of the field angle of the stereo camera 11 and irradiation ranges of the laser radar distance measurement sections 12. In FIG. 4, right and left cameras of the stereo camera 11 have the same field angle and image the respective predetermined ranges in front of the vehicle. In the range where the field angle of the right camera and the field angle of the left camera overlap, it is possible for the image processing device 100 to detect parallax.

Further, it is assumed that the scanning range of the laser radar distance measurement sections 12 disposed in the right back mirror is a predetermined range on a right side of the field angle of the right camera (e.g., diagonally forward right side). Similarly, it is assumed that the scanning range of the laser radar distance measurement sections 12 disposed in the left back mirror is a predetermined range on a left side of the field angle of the left camera (e.g., diagonally forward left side), Here, the scanning range of the right laser radar distance measurement sections 12 may be overlapped with the field angle of the right or left camera. Further, the scanning range of the left laser radar distance measurement sections 12 may also be overlapped with the field angle of the right or left camera. In the overlapped area, the information can be acquired such as the distance to the object (distance information, etc.) by using at least one of the right and left cameras and laser light.

As described above, by making it possible to detect an object, which is disposed outside the field angle of the right and left cameras, by using the laser light, it becomes possible for the image processing device 100 to detect crossing, cut in, passing etc., by a vehicle, a pedestrian, etc., in advance.

Example configuration

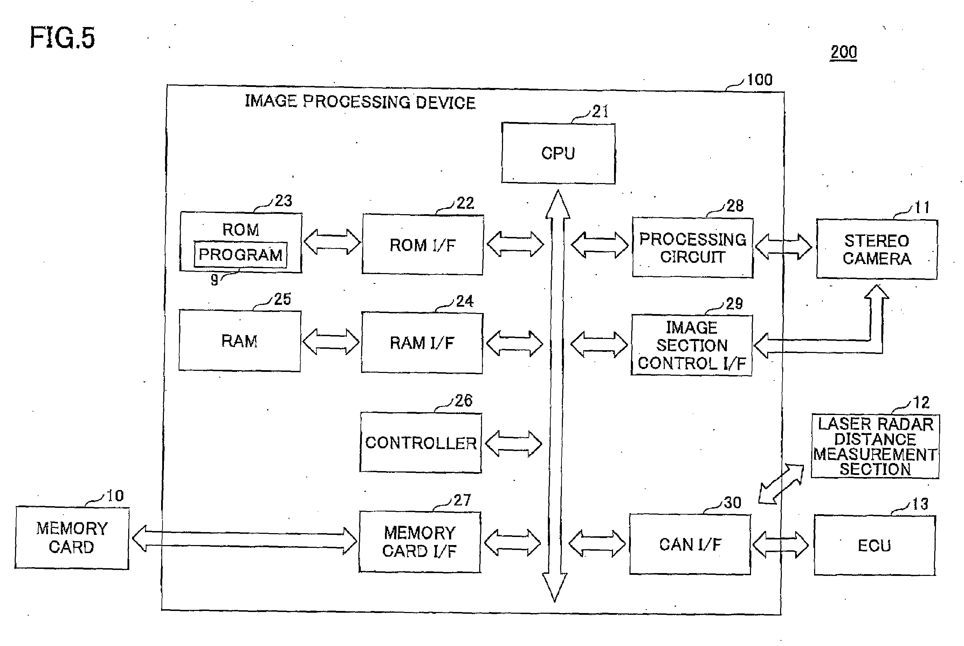

FIG. 5 illustrates an example schematic configuration of a drive support system 200 according to an embodiment. The drive support system 200 includes the image processing device 100, the stereo camera 11, the laser radar distance measurement section 12, and an Electronic Control Unit (ECU) 13.

The ECU 13 provides various drive support by using object information that is output from the image processing device 100. The drive support varies depending on vehicles. For example, when the lateral position of a target overlaps the width of the self-vehicle, an alert is issued and a control operation is performed in accordance with Time-To-Collision (TTC) which is calculated based on the distance and the relative speed. Further, when it is determined that it is difficult to stop before collision, the steering is directed so as to avoid the collision.

Further, the ECU 13 performs all vehicle speed control and vehicle distance control, so that the self-vehicle can follow the preceding vehicle with a vehicle distance in accordance with the vehicle speed, and when the preceding vehicle stops the self-vehicle also stops and when the preceding vehicle starts the self-vehicle also starts. Further, in a case where the image processing device 100 performs white-line recognition, etc., the ECU 13 performs lane-keeping control to operate steering so that the self-vehicle can travel in the middle of the traffic lane.

Further, in a case where there is an obstacle in the traveling direction while parking (already parked), the ECU 13 controls the sudden start. To that end, for example, when there is an obstacle in the traveling direction determined based on the operational position of the shift lever and the operation amount of the accelerator pedal is large, the ECU 13 controls the engine output and issues an alert, so as to reduce damage.

Note that the configuration of FIG 5 is an example only. For example, the stereo camera 11 and the image processing device 100 may be integrated into a single body. Further, the ECU 13 may include the functions of the image processing device 100.

The image processing device 100 includes a configuration as a general-purpose image processing device (computer) and a configuration to perform processing on the images captured by the stereo camera 11. The image processing device 100 includes a Central Processing Unit (CPU) 21, a Read-Only Memory Interface (ROM I/F) 22, a Random Access Memory Interface (RAM I/F) 24, a controller 26, a memory card I/F 27, a processing circuit 28, an imaging section control I/F 29, and a Controller Area Network Interface (CAN I/F) 30.

The ROM I/F 22 reads a program 9, etc., from a ROM 23 in accordance with the instructions from the CPU 21. The RAM I/F 24 reads the program 9, etc., from a RAM 25 in accordance with the instructions from the CPU 21, and writes data in the RAM 25. The program 9 stored in the ROM 23 is to performs object recognition and execute a process of generating the prediction information. The program 9 may be distributed by using a memory card 10 storing the program 9 or may be distributed by being downloaded from a server via a cellular phone network or a communication network such as a wireless LAN network. The RAM 25 is used as a work area (where a program and data are temporarily stored) when the CPU 21 executes the program 9.

The controller 26 controls interruption, a timer, etc. For example, the controller 26 is used to periodically acquire images from the stereo camera 11 based on timer and interrupt the CPU 21 when the images are acquired from the stereo camera 11.

The memory card I/F 27 reads data from a memory card 10 in accordance with the instructions from the CPU 21, and writes data to the memory card 10.

The processing circuit 28 performs processing on the images captured by the stereo camera 11. Specifically, the processing circuit 28 performs gamma correction, distortion correction, polarization processing, etc., described below.

The imaging section control I/F 29 outputs a control signal to the stereo camera 11, so as to control the exposure, the white balance, etc., of the stereo camera 11.

The CAN I/F 30 is a communication device to perform communications based on a Controller Area Network (CAN) protocol which is an in-vehicle LAN standard. However, note that the communications may be performed by using a communication protocol such as the Internet (registered trademark), FrexLay, MOST, Local Interconnect Network (LIN). The CAN I/F 30 is connected to the laser radar distance measurement sections 12 and the ECU 13.

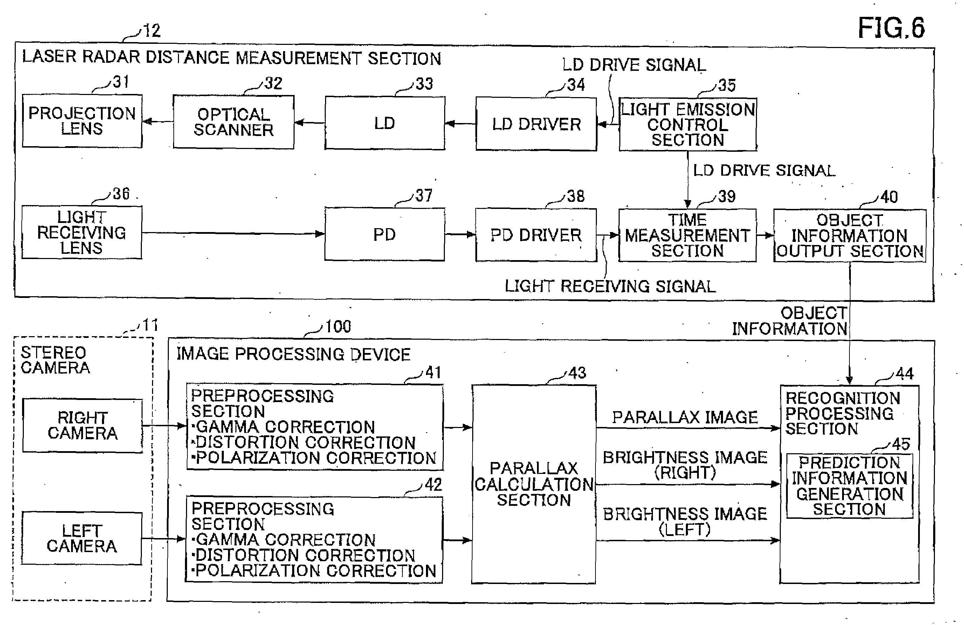

FIG. 6 is an example functional block diagram of the laser radar distance measurement section 12 and the image processing device 100. The laser radar distance measurement section 12 includes a light emission control section 35, a Laser Diode (LD) driver 34, an LD 33, an optical scanner 32, and a projection lens 31 as a light projection system. The LD 33 is a semiconductor laser diode that emits pulsed laser light. The irradiation direction of light from the LD 33 is changed by the optical scanner 32, and the light passes through the projection lens 31. The projection lens 31 converges the laser light having passed through the optical scanner 32. The laser light irradiated from the semiconductor laser is generally used. However, the laser light may be irradiated based on any other principle of light emission by using, for example, a solid-state laser, a gas laser, a dye laser or the like. The laser light is a kind of electromagnetic wave having excellent directivity and convergence performance. In light of the safety concerns, it is preferable to use laser light having an infrared wavelength.

The LD 33 is connected to the light emission control section 35 via the LD driver 34, so that the LD 33 can periodically or continuously emit laser light based on an LD drive signal from the light emission control section 35. The LD driver 34 generates, for example, a pulse signal so that the LD 33 can irradiate laser light. The LD drive signal is transmitted to a time measurement section 39.

The optical scanner 32 repeatedly scans the laser light from the LD33 in the horizontal direction at a predetermined fixed cycle. The scanning angle of the laser light at the optical scanner 32 is detected by a scanning angle monitor (not shown). By monitoring the actual scanning angle, it becomes possible for the laser radar distance measurement section 12 to control the scanning angle and the scanning frequency of the optical scanner 32.

The laser radar distance measurement section 12 includes a light receiving lens 36, a Photo Diode (PD) 37, a PD driver 38, the time measurement section 39, and an object information output section 40 as a light receiving system. The object on which the laser light is irradiated or the position of the object on which the laser light is irradiated herein refers to the claimed "reflection position". The laser light, which is reflected by an object in front of the vehicle (self-vehicle), is incident into the PD 37 via the light receiving lens 36. The PD 37 outputs an electronic signal of a voltage value corresponding to the light intensity of the reflected light. The electronic signal output from the PD 37 is output to the PD driver 38. Then, when the electronic signal is greater than a threshold value, the PD driver 38 outputs a light receiving signal to the time measurement section 39.

The time measurement section 39 measures a time period from when the LD drive signal, which is output from the light emission control section 35 to the LD driver 34, is output until when the light receiving signal is generated (i.e., the time difference between the time when laser light is irradiated and the time when the reflected light is received). The reflected light is an example of the claimed "reflected wave".

The object information output section 40 outputs the object information (distance, orientation, relative speed, moving direction, etc.) to the image processing device 100. Here, the distance to the object can be calculated based on the time difference measured by the time measurement section 39. The orientation of the object (orientation information) can be determined in accordance with the irradiation direction of the laser light. The relative speed, which is the speed of the object relative to the self-vehicle, can be calculated by monitoring the distance to the same object in a time series manner. Further, three-dimensional coordinates of the object (e.g., the coordinates of the object in a coordinate system having the origin which is at the center of the header end section of the self-vehicle in the vehicle width direction) can be calculated based on the distance and the orientation. Therefore, it becomes possible to determine the moving position by monitoring the coordinates in a time series manner.

As the optical scanner 32, an optical scanner having a polygon mirror, a Galvano mirror or the like may be used. Further, in this embodiment, it is basically sufficient when the optical scanner 32 can horizontally scan laser light on the road surface. However, the optical scanner 32 may vertically scan laser light as well. By making it possible to scan an up and down direction as well, it becomes possible to enlarge the scanning range by the laser light and enhance the recognition accuracy of the object by detecting the road surface.

As a means for enabling scanning in an up and down direction, there is a structure in which scanning devices such as mirrors having scanning directions which differ by 90 degrees are connected in series to the optical scanner, so that right after laser light is scanned in the horizontal direction, the laser light is scanned in the vertical direction.

Further, to that end, plural polygon mirrors may be laminated in the vertical direction, so that plural laser light beams arranged in an up and down direction can be scanned in the horizontal direction. In order to achieve plural line scanning more easily, there is a structure in which an inclination angle is formed on a reflection surface relative to the optical axis of a rotating polygon mirror, so that the inclination angles relative to plural reflection surfaces differ from each other.

Next, the stereo camera 11 is described. The stereo camera 11 captures synchronized stereo image (i.e., left and right images captured at the same time), and outputs the image to the image processing device 100. Further, in this embodiment, a case is described where the distance (distance information) can be acquired and a distance image is captured by the stereo camera 11. However, in place of the stereo camera, for example, a monocular Time-Of-Flight (TOF) camera, which uses a part of pixels to detect the distance, or another monocular camera, which calculates parallax by comparing plural frames under assumption that the camera is moving, may be used. When such a monocular camera is used, it is not necessary to perform calculation, for example, to adjust the base-line length. Therefore, it becomes possible to reduce the cost.

Further, the stereo camera 11 may capture a color image. In this case, by using any one of RGB images or after pixel values are converted into the brightness values, the road detection and the object recognition are performed. Further, the stereo camera 11 may capture an image via a polarization filter. By using the polarization filter, it becomes possible to capture an image which is difficult to be seen by the naked eye, so as to improve the accuracy of the road detection and the object recognition.

The image processing device 100 includes preprocessing sections 41 and 42 corresponding to right and left images. The preprocessing sections 41 and 42 perform gamma correction, distortion correction, polarization processing, etc. The preprocessing sections 41 and 42 further performs various image processing such as an RGB to YCrCb conversion process, a white balance (control) process, a contrast correction process, an edge enhancement process, a color conversion process, etc. Here, the white balance (control) process adjusts the color strength of image information. The contrast correction process adjusts the contrast of the image information. The edge enhancement process adjusts the sharpness of the image information. The color conversion process adjusts colors of the image information.

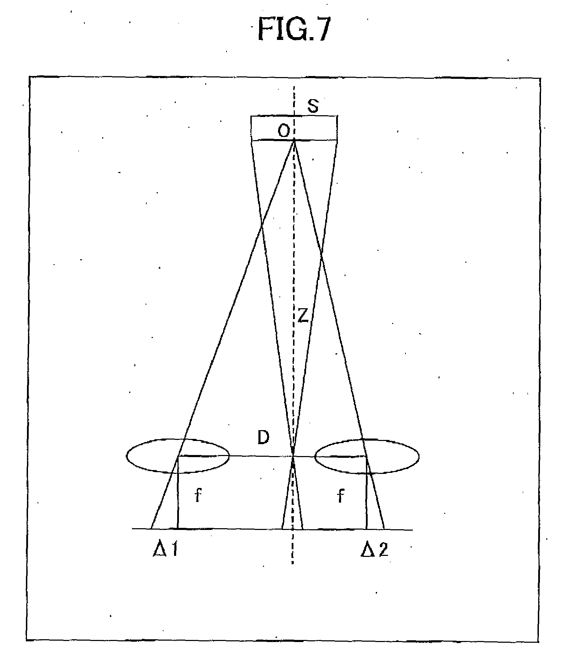

Next, parallax calculation is described with reference to FIG. 7. FIG. 7 illustrates an example of the parallax calculation performed by a parallax calculation section 43. The light from an image of point "O" on an object (imaging object) "S" passes through left and right lenses, so that the images are formed on the picture elements separated from the lenses by the focal length "f". Here, it is assumed that the distance from the lenses to the object "S" is given as "Z", and the distance between the centers of the left and right lenses (i.e., base-line length) is given as "D". It is also assumed that image formed positions in left and right images are separated from the left and right lenses by the distances "$\Delta 1$" and "$\Delta 2$", respectively. Therefore, the parallax of the point "O" is given as "$\Delta (=\Delta 1+\Delta 2)$".

Such a parallax is calculated by performing block matching on the same part of the left and right images. Namely, any one of the left image and the right image is determined (set) as a reference image. For example, when the left image is set as the reference image, the left image is divided into a block having an attention pixel at the center of the block, so that a sum is calculated of the differences in the brightness values of the pixels between the block of the left image and the block of the right image in the same position. The calculation of the sum of the differences of the brightness values of the pixels is repeated while the block of the right image is pixel shifted one by one in the horizontal direction. By doing this, the movement amount of the block when the sum of the differences of the pixels between the blocks of the left and right images becomes minimum corresponds to the parallax. For example, when the sum of the differences in the brightness values between the block having the center (x, y) in the left image and the block having the center (x+$\Delta$, y) in the right image is the lowest (minimum), the parallax is obtained as "$\Delta$".

The block is not limited to a specific size. In this embodiment, when the image size is 1280 by 960 pixels, it is assumed that the block size is, for example, 5 by 5 pixels. Note that an appropriate (optimum) block size can be determined by adjusting in experiments.

Further, when the parallax is given as "$\Delta$", the distance "Z" is expressed as follows:

$$Z = D \cdot f / \Delta$$

The acquired parallax image is stored in the RAM 25 of the image processing device 100. Further, at least one of a monochrome image, a color image (including one or more of RGB), and a polarization image (hereinafter "brightness image") is output to a recognition processing section 44. An object recognition process is performed on the brightness image and the distance to the object is calculated based on the parallax image. Therefore, the parallax image in association with the brightness image captured at the same time when the parallax image is acquired are stored as a set in'the RAM 25, etc.

The recognition processing section 44 performs the object recognition, and outputs the object information as a result of the recognition. Regarding an object that is detected only by the laser radar distance measurement sections 12, the recognition result of the object is output as the object information recognized by the laser radar distance measurement sections 12. The recognition result of the object that is captured as an image but which is not detected by the laser light is output as the object information recognized by the recognition processing section 44. Further, as for the object that is imaged and detected by laser radar distance measurement sections 12, it is possible to obtain the recognition result having higher reliability. Such a process is called "sensor fusion".

The recognition processing section 44 includes a prediction information generation section 45. The prediction information generation section 45 generates the prediction information based on the object information. The prediction information of an example of the claimed "prediction area information". Details of the prediction information are described below.

Object information

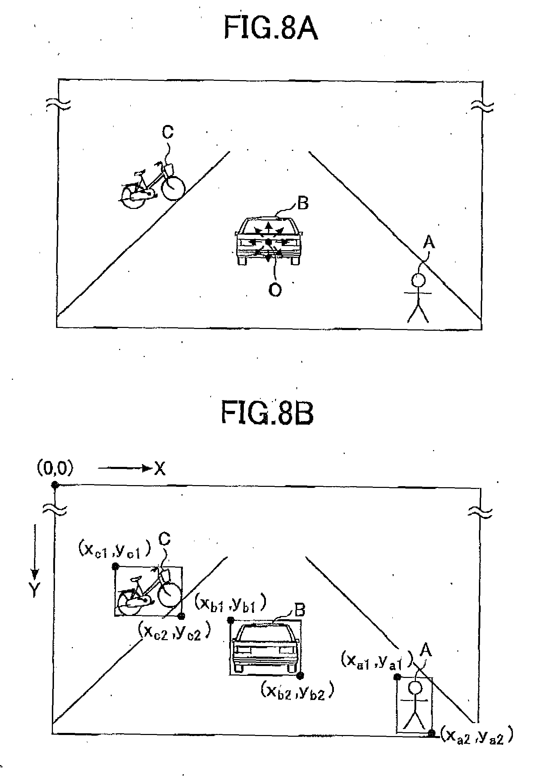

The object recognition performed by the recognition processing section 44 is described with reference to FIGS. 8A and 8B. FIG. 8A schematically illustrates an example of the parallax image. FIG. 8A, a pedestrian "A", a preceding vehicle "B", and a bicycle "C" are imaged. The recognition processing section 44 recognizes an object mainly via processes called "clustering" and "verification".

The clustering refers to a process of extracting a pixel range having substantially the same parallax in a rectangular (or any other shape) area. When an object is imaged, the parallax values in the range where the object is imaged become substantially the same in the parallax image. The recognition processing section 44 performs clustering by recognizing the approximate position of the object by generating a histogram of the parallax values described below.

When an approximate object position "O" is recognized, the recognition processing section 44 searches for the pixel having the same parallax value from the position "O". Specifically, when the difference of the parallax values of the adjacent pixels is less than or equal to a predetermined threshold value, the recognition processing section 44 presumes that a single object is imaged. By repeating this determination on the pixels having the difference of the parallax values of the adjacent pixels is less than or equal to the predetermined threshold value, it becomes possible to perform clustering on the area where the single object is imaged. By connecting the upper left, upper right, lower left, and lower right corners of the pixels having the same parallax value, a rectangular area is obtained.

FIG. 8B illustrates an example of the clustered objects. The rectangles surrounding the pedestrian "A", the preceding vehicle "B", and the bicycle "C" are clustered areas. The recognition processing section 44 determines the coordinates of the clustered areas. The coordinates are expressed in a manner that, for example, the left upper corner point of the parallax image is defined as the origin (0, 0), and horizontal and vertical (up and down) directions are defined as X and Y axes, respectively.

Next, the verification is described. The verification refers to identify the clustered areas as the specific objects such as the pedestrian, the vehicle, the bicycle, etc. Note that the verification includes the determination that an object is not an object o be recognized. The rectangular area where the verification is performed is an example of the claimed "object area".

The verification is performed based on a result determined by using various parameters (items), which are appropriate for the object recognition, as follows:

- aspect ratio (horizontal to vertical ratio) of the rectangular area
- height from the road surface (distance from road surface to the bottom side of the rectangular area)
- recognition result acquired by image recognition such as pattern recognition
- moving speed

Those parameters are not always commonly used among the objects. Namely, some parameters may not be used for the objects such as the vehicle, the pedestrian, the bicycle, etc.

In the determination based on the aspect ratio, for example in the case of vertical length > horizontal length, the object is determined as a pedestrian, and in the case of vertical length < horizontal length, the object is determined as a vehicle. Further, the object is determined as a bicycle based on an aspect ratio change in time (the change of the'aspect ratio in a bicycle is smaller than that in a pedestrian).

In the determination based on the height from the road surface, for example, when a rectangular area exists on a road surface, the object can be determined as a vehicle or a bicycle. When the rectangular area does not exist on a road surface, the object can be determined as, for example, a pedestrian.

In the determination by the image recognition such as pattern recognition, for example, it is determined whether a characteristic amount is similar by the image recognition using the characteristic amount, so as to determine that the object is a vehicle, a pedestrian, a vehicle or the like. As a characteristic amount, a Haar-like characteristic amount and a Histograms of Oriented Gradients (HOG) characteristic amount are known. In this embodiment, any of those may be used or any combination thereof may be used.

When any of the characteristic amounts is used, the recognition processing section 44 generates a dictionary for recognition by using study data of the objects in advance. Namely, in advance, various sizes of image data of vehicles, pedestrians, bicycles, etc., (hereinafter "positive learning data") are prepared (provided) in advance. Further, the size of image data where a vehicle, a pedestrian, etc., are not included (imaged) (hereinafter "negative learning data") are prepared (provided) in advance. Based on the comparison result among those learning data and the characteristic amounts for identification (identification device), weighting factors of the characteristic amounts for identifications are determined.

$$f(x) = \sum_{t=1}^{T} \alpha_t h_t(x) \qquad \cdots\cdots(1)$$

In Formula (1), "$\alpha_t$" denotes the weighting of the characteristic amount for identification, "$h_t(x)$" denotes the characteristic amount for identification, and "T" denotes the number of characteristic amounts for identification. The "$\alpha_t$" are studied based on the study data. Therefore, when a clustered rectangular area includes a vehicle or a pedestrian, the calculation result of Formula (1) becomes greater. Therefore, when the calculation result of Formula (1) is greater than or equal to a predetermined threshold value, it is possible to determine that the object is a vehicle, a pedestrian, or a bicycle (i.e., an object to be detected).

In the determination by the moving speed, for example, when the moving speed in the X direction described below is greater than or equal to a predetermined value, the object is determined as a vehicle or a bicycle. Otherwise, the object is determined as a pedestrian. Further, by using a fact that the relative speed relative to the self-vehicle is calculated as the object information, the speed of the object relative to the road surface may be estimated by considering the speed of the self-vehicle. In this case, based on the speed relative to the road surface, it is possible to determine that the object is a vehicle or a pedestrian.

The recognition processing section 44 performs the verification by using (combining) one or more of the above parameters, so as to determine what is the clustered object. Further, in a case where the drive support is to be performed, the recognition processing section 44 monitors the object information in a time series manner.

Object information

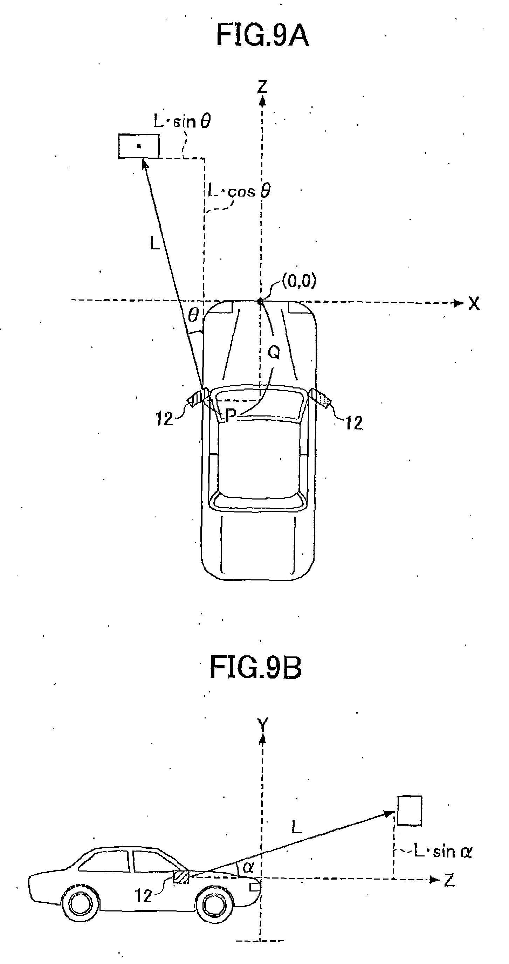

FIGS. 9A and 9B illustrate an example of the object information detected by the laser radar distance measurement sections 12. FIG. 9A is a top view and FIG. 9B is a side view. In the coordinates in FIGS. 9A and 9B, the origin is located at the header end section of the self-vehicle and at the middle in the vehicle width direction. Further, the X axis extends in the vehicle width direction (positive in the right direction), the Y axis extends in the height direction (positive in the upper direction), and the Z axis extends in the (vehicle) moving direction. Further, the laser radar distance measurement sections 12 are disposed at the positions which are separated from the header by "Q" in the Z axis and separated from the header and by "P" along the X axis (see FIG. 9A).

When "θ" denotes the orientation of an object in the horizontal direction and "L" denotes the distance to the object when the object is detected, the X coordinate and Z coordinate of the object are given as follows:

$$(X,\ Z) = (-P - L\sin\theta,\ L\cos\theta - Q)$$

Further, when the laser radar distance measurement sections 12 does not scan in an up and down direction, the Y coordinate of the object is zero (i.e., the height where the laser radar distance measurement sections 12 is disposed above the ground (road surface)). On the other hand, as illustrated in FIG. 9B, when the laser radar distance measurement sections 12 scans in an up and down direction, when the elevation angle and the distance when the object is detected are given as "$\alpha$" and "L", respectively, the Y coordinate of the object is determined as follows. Therefore, the three-dimensional coordinates (X, Y, Z) can be determined easily.

$$Y = L \sin \theta$$

The recognition processing section 44 monitors the coordinates (X, Y, Z) of the object in a time series manner, and when the change of the distance is repeated within a threshold value, the recognition processing section 44 determines that the coordinates of the object as the coordinates of the same object. The relative speed is calculated based on a difference between the distance "L" when the object is detected by the current scan and the distance "L" when the object is detected by the next scan, and the time interval between scans. Further, the moving direction is expressed by using a vector connected to the coordinates at a certain time and the coordinates in the next scan. The moving speed is used whether there is a collisional relationship between the self-vehicle and the object (i.e. whether approaching direction or not). In this regard, the moving direction may indicate whether the moving direction is the approaching direction or not. Namely, when the value of the Z coordinate tends to be reduced and the absolute value of the X coordinate tends to be reduced (including a case where the absolute value of the X coordinate is constant when the X coordinates is included in a range of contact), the moving direction corresponds to the approaching direction.

Next, the object information acquired based on an image is descried. When the distance "L" to the object is known, there are the following relationships between the imaging position of the object in the image and the three dimensional coordinates in reals space.

$$X = x L / f$$

$$Y = y L / f$$

Where, "x" and "y" denote the pixel coordinates in the coordinate system where, for example, the origin is the center of the image data, and "f" denotes the focal length. Here, the distance "L" is calculated based on the parallax, "X" and "Y" can be obtained by the above formulas. The distance "L" and "X" (or the distance "L" and "Y") can be calculated based on "Z". Further, based on "X" and "Z", the orientation "$\theta$" can be calculated.

Therefore, based on the parallax image and the brightness image and the brightness image, the distance "L", the orientation "$\theta$", "X", "Y", and "Z" can be obtained. Further, due to the clustering, the object is recognized as a rectangle in an image. Therefore, the recognition processing section 44 uses at least the distance "L" and the orientation to the center of the rectangle and the three dimensional coordinates of the center of the rectangle, and further uses the three dimensional coordinates of the opposite vertices of the rectangle on an as necessary basis.

Further, when the object is determined as a vehicle, a pedestrian, etc., by the verification, the recognition processing section 44 monitors the rectangular area in a time series manner, so that the recognition processing section 44 determines that the rectangular areas of the objects having substantially the same distance and having rectangles overlapping with each other are the rectangular areas of the same object.

The relative speed is calculated based on the difference between the distance "L" to the object calculated based on the current image and the distance "L" to the object calculated based on the next captured image, and the time interval between imaging. The moving direction is the same as that described in the description of the laser radar distance measurement sections 12.

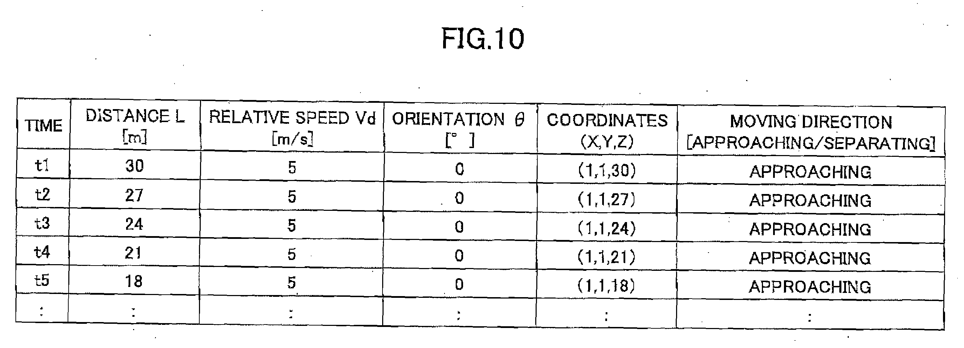

FIG. 10 schematically illustrates an example of the object information in which data changes in a time series manner. Here, it is assumed the items of the object information output by the laser radar distance measurement sections 12 are the same as the items of the object information output by the recognition processing section 44. In FIG. 10, the object information of one object after verification is illustrated in a time series manner. The recognition processing section 44 can refer to past object information of the same object, so that the recognition processing section 44 can omit the clustering and simplify the parameters of the verification. As a result, it becomes possible for the recognition processing section 44 to finish the verification faster than when the object is recognized at the first time.

In the example of FIG. 10, the distance "L" becomes shorter as time passes. The relative speed is a positive value and constant. The orientation is zero degrees. Therefore, an object right in front the vehicle relatively approaches the vehicle. Further, only the coordinate value in the Z axis is reduced. Therefore, the moving direction indicates "approaching". This object information is used to generate the prediction information.

Preprocessing of clustering

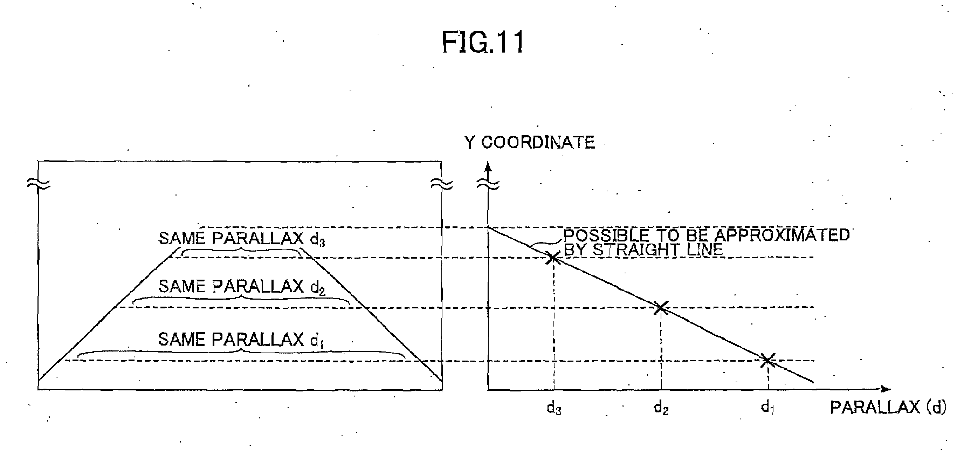

FIG. 11 illustrates an example of the detection of a road surface area. For explanatory purposes, no object is described. The left side of FIG. 11 schematically illustrates a road surface in a parallax image. The right side of FIG. 11 illustrates a parallax histogram. In the parallax histogram, the parallax "d" of one line in the horizontal direction of the parallax image is dotted in a two-dimensional plane of the parallax "d" and the y coordinate of the parallax image. The road surface area is flat. Therefore, the parallax "d" of one line in the horizontal direction of only the road surface area becomes substantially constant (see parallax d1-d3 in FIG. 11). Therefore, when there exists a road surface area, in the histogram of the parallax "d" of one line in the horizontal direction, the parallax is concentrated in the parallax "d". For example, in the histogram, the parallax of one line in the horizontal direction is concentrated to the parallax "d1", "d2", or "d3".

The parallax "d" gradually decreases as the object becomes farther (in the direction where y coordinate becomes greater). Therefore, when the parallax "d" is dotted in the above two-dimensional plane, the dotted point gradually moves in the left upper direction.

In a case of a flat road, there is a proportional relationship between the y coordinate and parallax "d". Due to this, the dotted points in the parallax histogram can be approximated by a straight line. Therefore, when a straight line can be detected that can be substantially regarded as a straight line based on plural dotted points, it becomes possible to detect the road surface area in the parallax image. Here, such a straight line may be detected by using, for example, Hough transformation.

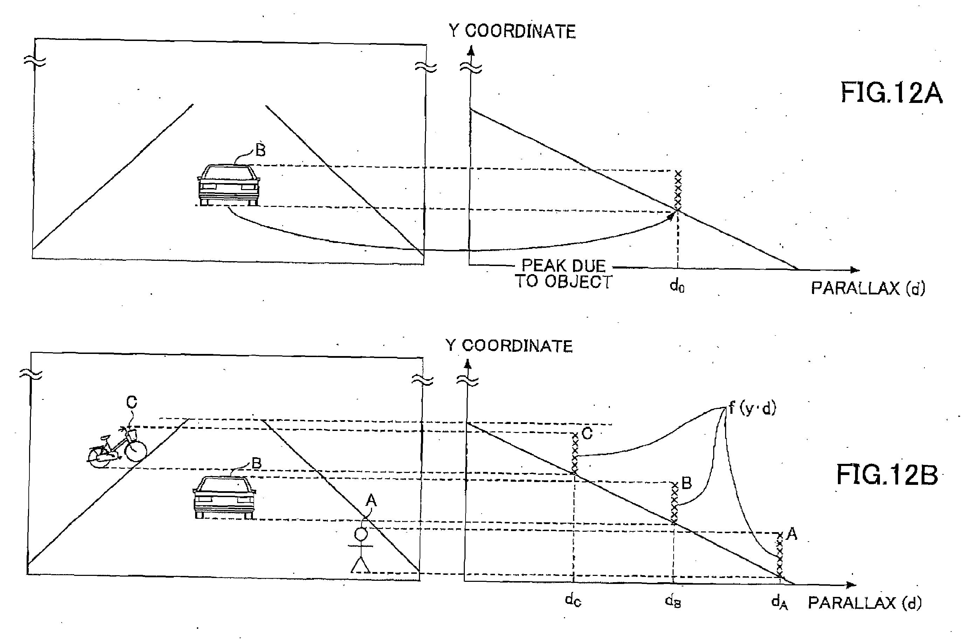

FIG. 12A illustrates an example of a histogram of parallax values when there exists an object. The parallax is dotted in a straight line manner similar to FIG. 11. However, dotted points due to the parallax of the object appear in a straight line manner. In the area of the object, the parallax "d0" due to the object is dotted as a straight line. Therefore, the plural dotted lines of the parallax "d0" can be approximated by a straight line which is parallel to the y coordinates. Further, the position of an object is always closer to the self-vehicle (i.e., the parallax of the object is greater) than that of the road surface area, the straight line due to the parallax-"d0" of the object is drawn on the right side of the straight line of the road surface.

FIG. 12B illustrates an example of straight lines which are extracted when a pedestrian "A", a preceding vehicle "B", and a bicycle "C" are imaged. The parallax "d" where the objects exist ("$d_A$", "$d_B$", and "$d_C$" in the figure), the dotted points forming the straight lines which are parallel to the y direction are observed. In other words, when dotted points can be approximated by a straight line which is parallel to the y direction, there is a likelihood that there exists an object in a range of the y coordinate where the approximated straight line is formed. Hereinafter, the straight line is called a "straight line f (y · d)".

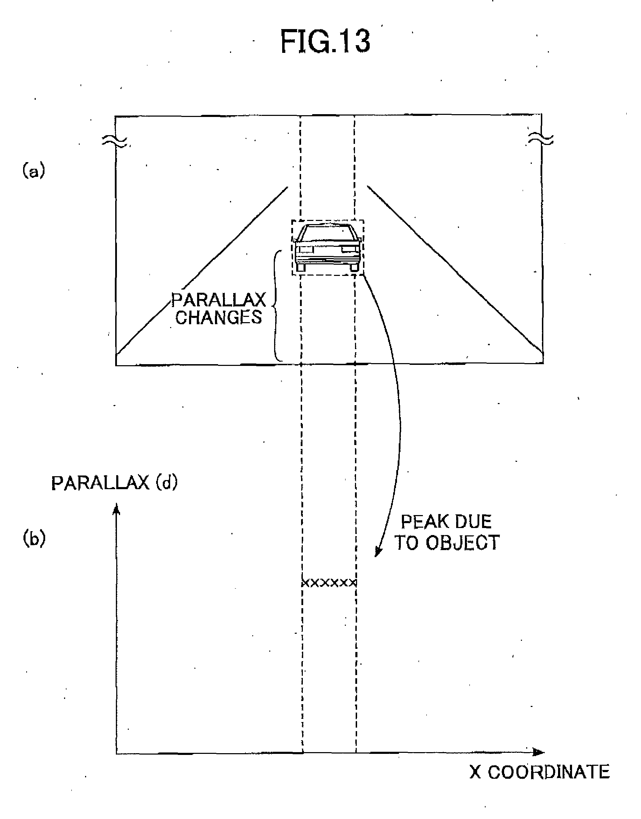

Next, with reference to FIG. 13, the relationship between the x coordinate and the parallax "d" is described. Part (a) of FIG. 13 illustrates a parallax image, and part (b) of FIG. 13 illustrates a parallax histogram. FIG. 13 collectively and schematically illustrates an example of the relationship between the x coordinate of the parallax image and the parallax histogram. Part (b) of FIG. 13 illustrates the parallax histogram of one line in the vertical direction of the parallax image. Here, in the road surface area, the parallax gradually changes in the height direction of the parallax image. Therefore, the parallax "d" in one line in the vertical direction within the road surface area does not appear in a converged manner.

On the other hand, a range of the x coordinates where an object exists, has substantially a constant parallax "d". Therefore, in the x coordinate range where an object exists, parallax "d" which is substantially the same as the parallax "d" is dotted. Accordingly, the dotted points of the plural parallaxes can be approximated by a straight line which is parallel to the x coordinate (x direction).

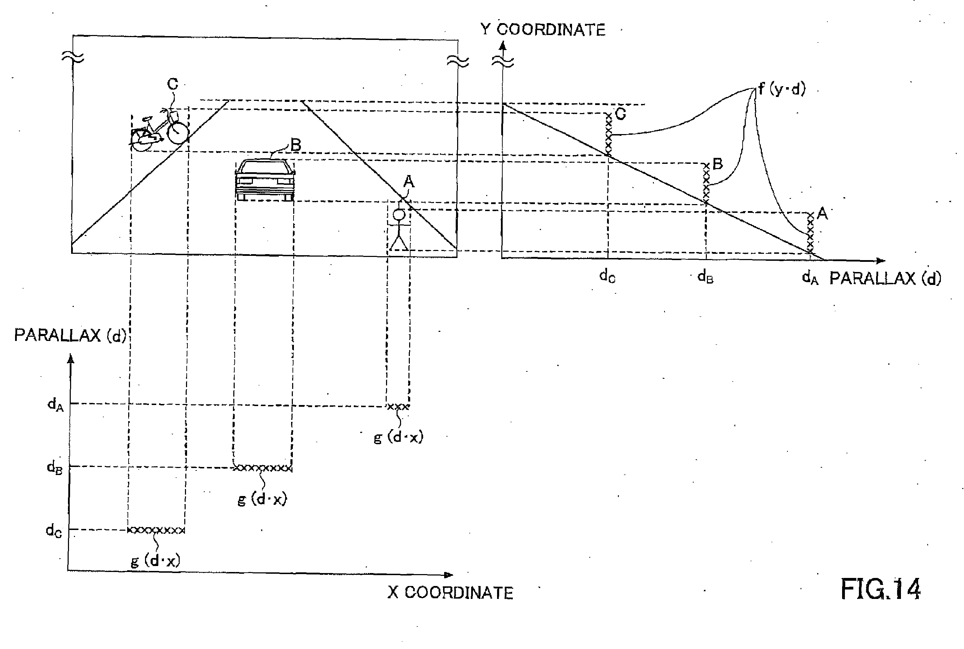

FIG. 14 illustrates an example of straight lines which are extracted when a pedestrian "A", a preceding vehicle "B", and a bicycle "C" are imaged. In the places (areas) where those objects exist, it is observed that the dotted points can be approximated by the straight lines which are parallel to the x direction. In other words, when a straight line which is parallel to the x direction is detected, there is a likelihood that there exists an object within a range of the x coordinates of the straight line. Hereinafter, the straight line is called a straight line g (d · x)".

As apparent from the relationship between the y coordinate and the parallax "d" and the relationship between the x coordinate and the parallax "d" of FIG. 14, the parallax "d" of the same object is the same in the y coordinate and in the x coordinate. For example, the parallax "$d_C$" of the straight line f (y · d) of the bicycle "C" and the parallax "$d_C$" of the straight line g (d · x) of the bicycle "C" are substantially the same as each other. Therefore, it becomes possible to identify the range where one object is imaged in the parallax image by associating the straight line f (y · d) with the straight line g (d · x) based on the parallax "$d_C$". Further, within the range, there is a high likelihood that an object (e.g., the bicycle "C") exists. Therefore, the range can be determined as a start point "O" to start clustering (see FIG. 8A). Namely, it is possible to detect a range (area) which can be a candidate where an object exists relative to an image area whose distance is closer than that of the road surface (candidate area).

As described above, the recognition processing section 44 performs a detection process to detect a straight line on the parallax image and can identify an area where there is a high likelihood that an object exits by detecting the straight line f (y · d) and the straight line g (d · x) in the parallax image, so that it becomes possible to effectively start clustering.

Prediction information

Next, the prediction information is descried. The recognition processing section 44 can reduce the time period before the verification starts if the recognition processing section 44 knows in which position (part) of an image an object will be imaged (hereinafter "predicted capture area (range)", the predicted capture area is an example of claimed "estimated imaging area"), and when the imaging is started.

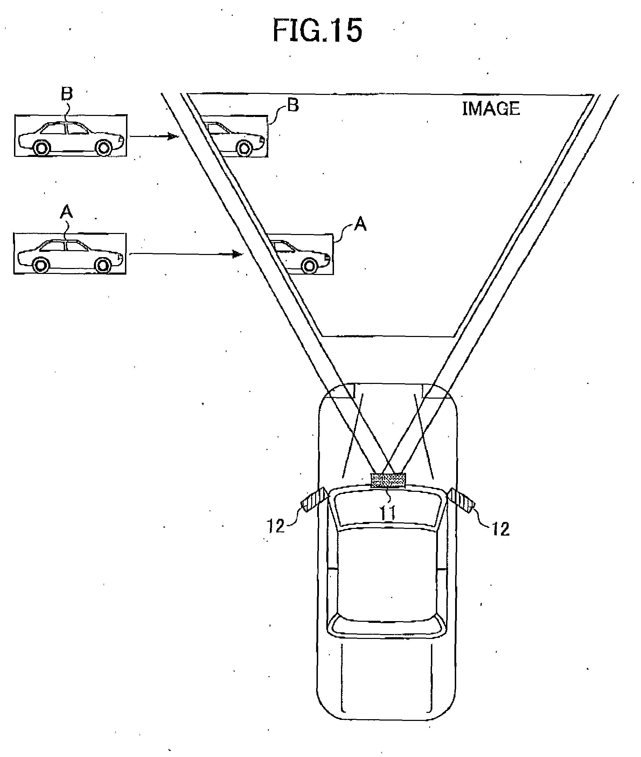

FIG. 15 illustrates an example of the predicted capture area. Here, objects (vehicles "A" and "B") are detected outside the range of the field angle of the stereo camera 11. In the images captured by the stereo camera 11, as apparent from the image of a road surface, the farther an object is, the higher the position of an object imaged in the image. Therefore, among the two vehicles "A" and "B" of FIG. 15, the vehicle "A" which is closer is imaged in a lower part and the vehicle "B" which is farther is imaged in a upper part. The relationship between the actual distance to the object and the height position in the image is acquired (determined) in advance by experimentation by a supplier of the image processing device 100, so that a predicted capture area table based on the relationship can be generated in advance.

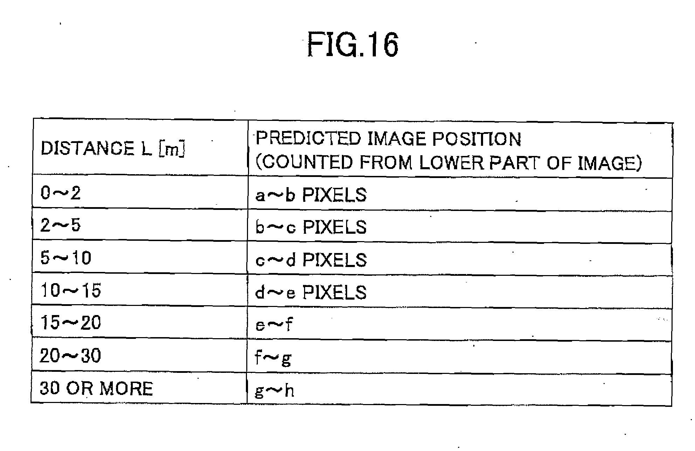

FIG. 16 illustrates an example of the predicted capture area table in which the distance "L" is associated with the predicted capture area. Here, the predicted capture area is in association with the number of pixels in accordance with the distance "L". The letters "a" through "h" in FIG. 16 indicates pixels. Accordingly, for example, in the case where the distance "L" is "0-2 m", the "a-b pixels" denotes that the range from the "a"th pixel to the "b"th pixel from the lower part of the image as the reference is a predicted image position (predicted capture area). Here, "a" through "h" have the relationships: a<b<c<d<e<f<g<h.

When the same object is imaged, the closer the object exists, the greater the number of the pixels corresponding to the object. Accordingly, the shorter the distance "L" is, the greater the number of the pixels of the predicted capture area. Namely, an inequation a~b>b~c>c~d>d~e>e~f>f~g>g~h is satisfied.

Further, preferably, the predicted capture area table is prepared for each type of the objects. This is because, for example, the height of a pedestrian differs from the height of a vehicle. Before the verification, the type of the object is basically unknown. However, it is possible to estimate the type of the object based on the moving speed or the relative speed calculated by the laser radar distance measurement sections 12.

Further, the lateral width of the predicted capture area is, for example, a predetermined fixed value. As the fixed value, the number of pixels in an up and down direction (i.e., a~b, b~c, c~d, d~e, e~ f, f~g, g~h) is used. Further, as the fixed value, the lateral width which is a minimum required for the verification may be used.

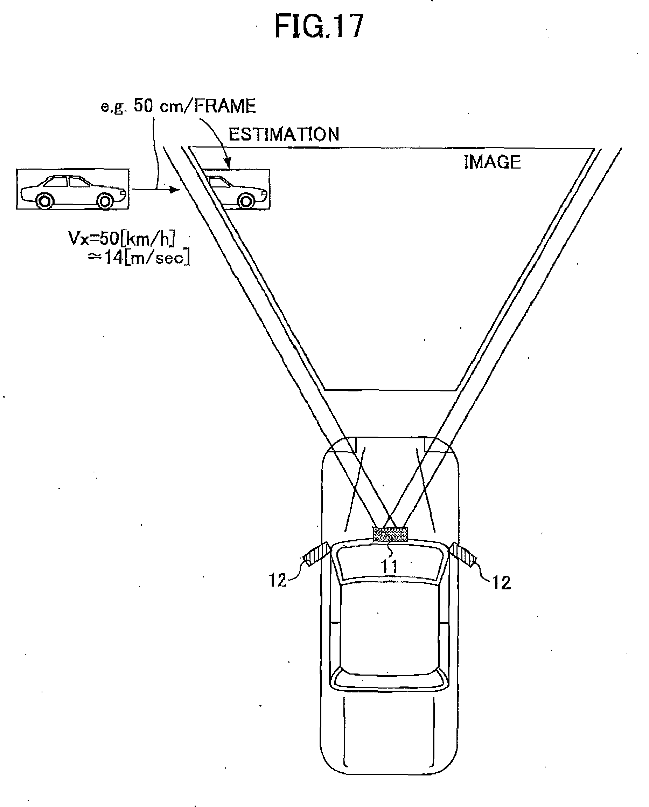

Further, the lateral width of the predicted capture area may be determined based on the consideration of the moving speed of the vehicle and the time interval between imaging. FIG. 17 illustrates an example lateral width of the predicted capture area based on the moving speed of the vehicle and the time interval between imaging. The object information includes the three dimensional coordinates. Therefore, it is possible to obtain the moving speed "Vx" in the X direction based on a time series of the X coordinates. Further, the time interval between imaging ("imaging time interval") is known (based on a control value). For example, it is assumed that

$$Vx = 50 \text{ km/h} \doteqdot 14 \text{ m/s};$$

and
the imaging time interval = 0.033 s = 30 fps.

In this case, an object moves approximately 50 cm while one image is captured. Therefore, approximately 50 cm is determined as the lateral width of the predicted capture area.

By knowing the lateral width of the predicted capture area, the number of pixels in the image is acquired as described below. As described above, the relationship X=xL/f is satisfied between the image position of the object in the image and the three-dimensional coordinate in the real space of the object. Here, for example, "x" and "y" denote coordinates of the pixels in the coordinate system where the center of the image data is the origin. Further, "f" denotes the focal length, and the distance "L" is calculated based on the parallax. Therefore, in the case where X=50 cm, it becomes possible to calculate "x" based on the distance "L" and the focal length "f". Therefore, when the X coordinate of the object approaches the capture area, it is possible to determine the lateral width in accordance with the moving speed in the X direction.

Further, as time passes, the object approaches in the area near the middle of the image. Therefore, the prediction information generation section 45 gradually enlarges the predicted capture area in the x direction as time passes. A degree of enlargement of the predicted capture area is determined based on the moving speed "Vx" in the X direction of the object. The process of enlarging the predicted capture area may continue until the whole of the object is imaged.

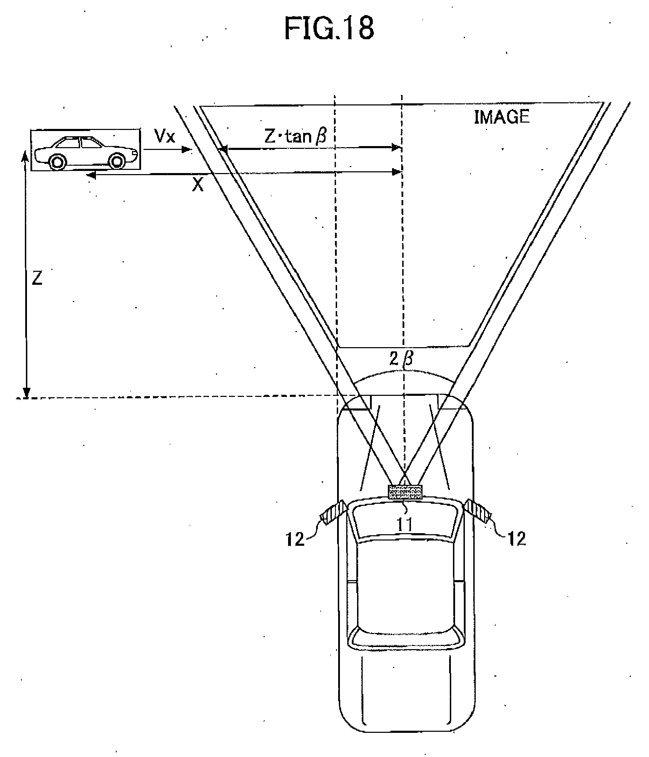

Next, the time when imaging is started of the prediction information is described. FIG. 18 illustrates an example when imaging starts. Here, the X coordinate and the Z coordinate of the object are detected by the laser radar distance measurement sections 12. Further, the field angle "$2\beta$" of the stereo camera 11 is known. Based on those, the imaging distance from the center in the vehicle width direction is given as "$Z \cdot \tan\beta$". Therefore, the distance until the object reaches within the field angle is calculated as "$X - Z \cdot \tan\beta$".

When the moving speed of the object in the X direction is given as "Vx", the time when imaging starts is expressed as follows.

$$\text{Time when imaging starts} = (X - Z \cdot \tan\beta)/Vx$$

The recognition processing section 44 can manage from which of the images the object recognition process in the predicted capture area is to be performed (started) by detecting the time when imaging starts. For example, when it is detected that an object is to be entered into the field angle just before the object enters into the field angle, it may not be possible to start performing the object recognition process on the predicted capture area from the image where the object is started to be captured (entered). According to this embodiment, by detecting in advance the time when imaging starts, it becomes possible to start performing the object recognition process on the predicted capture area from the image where the object starts to be captured (entered). Therefore, it becomes possible to perform early verification.

Object recognition by using prediction information

By knowing the predicted capture area, it becomes possible for the recognition processing section 44 to perform clustering and the verification on the predicted capture area.

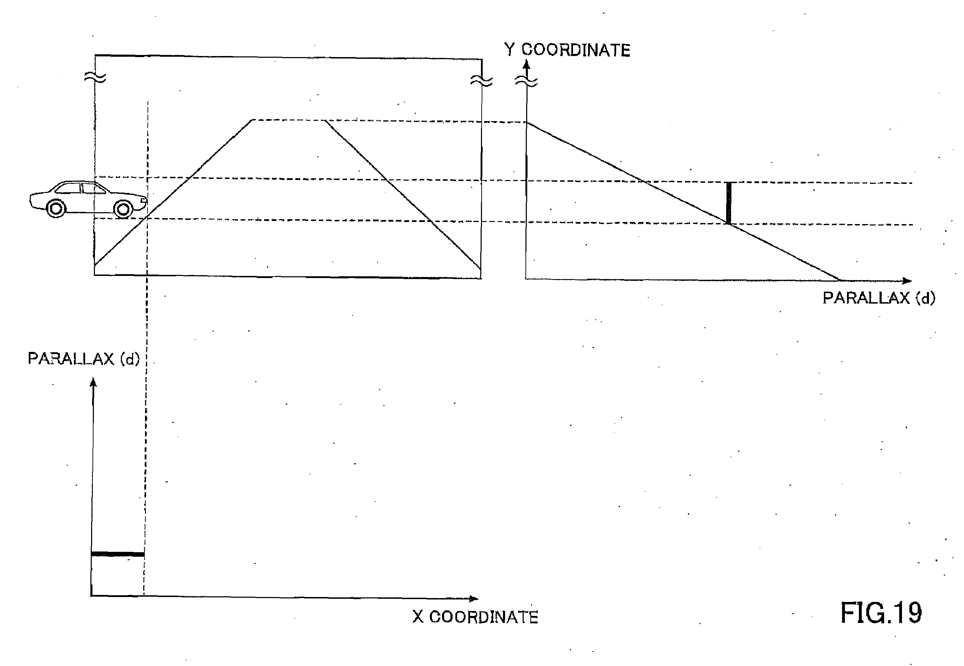

FIG. 19 illustrates an example of the clustering performed on the predicted capture area by the recognition processing section 44. As described above, there is a high likelihood that the straight lines are detected in the x range and the y range of the predicted capture area. Due to this, the recognition processing section 44 performs straight line detection on each of the x range and the y range of the predicted capture area in the parallax histogram.

Further, when a straight line is extracted in at least one of the x range and the y range, the clustering is started. As described above, by detecting a straight line in the predicted capture area, it becomes possible to make it easier to detect the straight line. Further, in the area where a straight line is expected to be detected, when only a single straight line in the x direction or the y direction is detected, the clustering is started. By doing this, it becomes possible to reduce the time before clustering.

Further, it may be effective when the threshold value to extract a straight line is mitigated (loosened, eased, alleviated). For example, the recognition processing section 44 permits the inclination of the straight line in the y direction if the inclination is within a predetermined angle relative not only in the y direction but also in the vertical direction (determines the extracted line as a straight line if the inclination of the parallax histogram relative to the vertical direction is within a predetermined angle in the clockwise or the counter-clockwise direction). In the same manner, the recognition processing section 44 permits the inclination of the straight line in the x direction if the inclination is within a predetermined angle relative to not only in the x direction but also in the horizontal direction (determines the extracted line as a straight line if the inclination of the parallax histogram relative to the horizontal direction is within a predetermined angle in the clockwise or the counter-clockwise direction).

Further, it is effective to alleviate the threshold value which is used to determine that a straight line is extracted in the x direction which is the entering direction. For example, in a case where it is determined that a straight line is extracted only when a straight line having at least a length "M" (threshold value) is extracted in normal image recognition which is other than the image recognition in the predicted capture area, it makes it possible to determine that a straight line is extracted even when the length of the straight line is less than "M". Further, for example, when a straight line having a length which is substantially half of the lateral width of the predicted capture area, it makes it possible to determine that the straight line is extracted regardless of the threshold value "M". By doing as described above, it becomes possible to make it easier to satisfy the condition to start clustering.

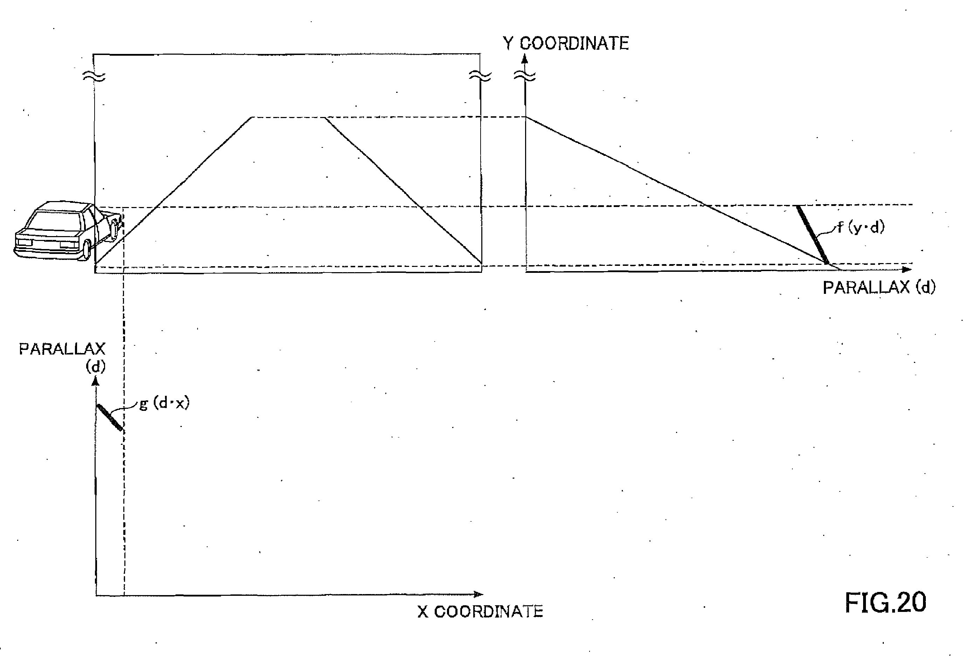

Further, in order to recognize an object earlier which approaches from the rear side, it is effective to extract a straight line which extends substantially in a direction other than the vertical and the horizontal directions. FIG. 20 illustrates an example of the clustering of an object which approaches from the rear side.

As exemplarily illustrated in FIG. 20, the side surface of the object is obliquely seen by the image processing device 100, so that the distance to the vehicle is gradually reduced as the position on the vehicle from the head end to the rear end of the vehicle. When an object approaches from the rear side, the side surface of the object enters into the imaging range earlier than the rear surface of the object. Due to this, there may be a case where the parallax in the range where the object is imaged is not substantially constant. In this case, the greater the y coordinate is, the lesser the parallax becomes. Therefore, the straight line f (y ▪ d) extends obliquely in the left upper direction. Further, the greater the x coordinate is, the lesser the parallax becomes. Therefore, the straight line g (d ▪ x) extends obliquely in the right lower direction. The angle of the inclination can be observed through experimentation.

Therefore, when detecting a straight line in each of the x range and the y range of the predicted capture area, the recognition processing section 44 determines whether the detected straight line f (y ▪ d) extends obliquely in the left upper direction and whether the detected straight line g (d x) extends obliquely in the right lower direction. In this case, when a straight line is extracted at least one of the x range and the y range, the clustering is started. In related technologies, the clustering is started only when both a vertical straight line f (y ▪ d) and a horizontal straight line g (d ▪ x) are detected. However, in this embodiment, an inclined straight line can be detected in the predicted capture area, so that the clustering can be started. Therefore, the clustering can be started before the rear side of the object is imaged, so that it becomes possible to recognize an object earlier.

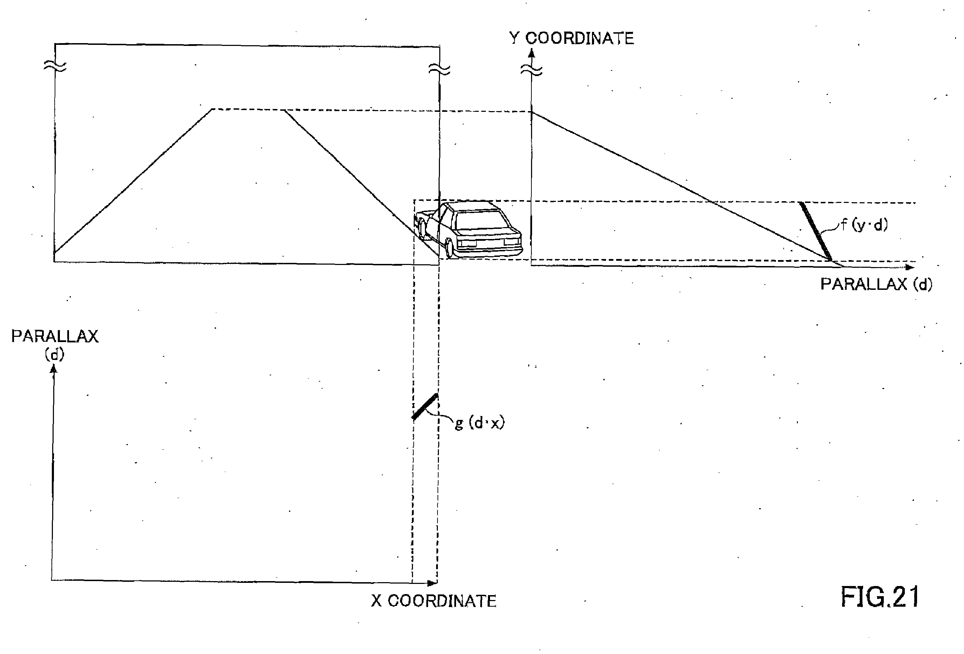

FIG. 21 illustrates an example of the straight line f (y ▪ d) and the straight line g (d ▪ x) when an object approaches from the right rear side. In this case where the object approaches from the right rear side, the straight line f (y ▪ d) extends obliquely in the left upper direction. On the other hand, the detected straight line g (d ▪ x) extends obliquely in the left lower direction because the lesser the x coordinate is, the lesser the parallax becomes.

Therefore, depending on whether the object approaches from the left rear side (the object is imaged at the left end part) or the object approaches from the right rear side (the object is imaged at the right end part), the recognition processing section 44 changes the inclination of the straight line g (d ▪ x) to be detected. The approaching direction is apparent based on the image in the predicted capture area. In other words, by changing a criterion for the clustering in accordance with the predicted capture area, it becomes easier to perform clustering on an object only a part of which is imaged.

The area on which the clustering is performed is determined based on the parallax value. Therefore, the area is not always the same as the predicted capture area. However, in the following, for explanatory purposes, it is assumed that the verification is performed on the predicted capture area.

Next, the verification of the predicted capture area is described. It is often that only a part of an object is imaged in the predicted capture area. Therefore, the aspect ratio (horizontal to vertical ratio) of the rectangular area, which is one of the parameters of the verification, is not used in the determination. Further, if the height from the road surface is used in the determination, there is a likelihood that an object which approaches from outside the field angle cannot be recognized as an object. Therefore, the height from the road surface is also not used in the determination.

On the other hand, in image recognition which is performed by pattern recognition, etc., the recognition processing section 44 uses a discriminator which can recognize an image in the predicted capture area (a partial image of an object). Specifically, positive learning data, in which a part of each object (e.g., vehicle, pedestrian, bicycle, etc.) is imaged, and negative learning data are prepared in advance, and weightings of the characteristic amounts for identification are determined. By assuming that only a part of an object is imaged and by switching the discriminator, it becomes possible to reduce the time for the verification of an object in the predicted capture area.

Further, in the predicted capture area, the moving speed is handled in the same manner in an area other than the predicted capture area. Namely, an object having a high (faster) moving speed in the X direction is recognized as a vehicle or a bicycle.

As described above, in the predicted capture area, by switching a parameter for the verification, it becomes possible to reduce the time period before the verification is finished even when only a part of a vehicle is imaged. For example, the aspect ratio of the rectangular area and the height from the road surface are not employed in the verification, and the image recognition process using the pattern recognition or the like and the moving speed are employed. As a result, the weightings of the two parameters are increased. Therefore, for example, even when it is difficult to recognize an object as a vehicle based on the image recognition process such as pattern recognition, it becomes possible to determine that the object is a vehicle when the moving speed in the X direction of the object is high. Therefore, it becomes possible to recognize an object as a vehicle or a bicycle earlier than an object outside the predicted capture area.

Example of image recognition using the predicted capture area

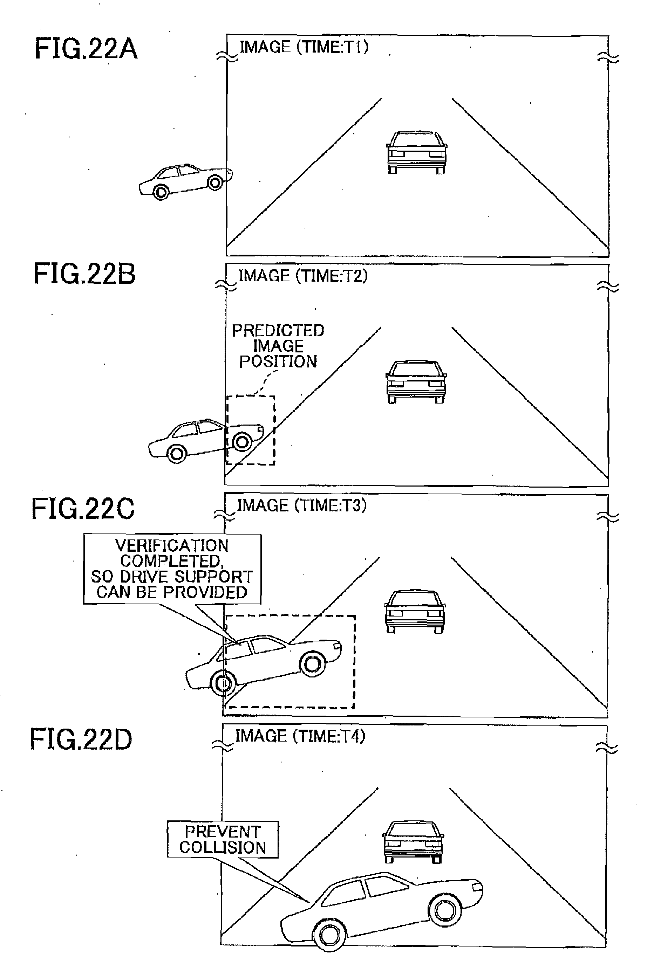

FIGS. 22A through 22D collectively illustrate an example of image recognition using the predicted capture area. In FIG. 22A, an object (vehicle) is detected by the laser radar distance measurement sections 12 outside the range of the field angle of the stereo camera 11. The laser radar distance measurement sections 12 acquires the object information, and outputs the object information to the recognition processing section 44. The prediction information generation section 45 generates the prediction information based on the object information. Based on the prediction information, the recognition processing section 44 can recognize from when the object recognition process is to start performing on the predicted capture area.

In FIG. 22B, the imaging of a part of the object in the predicted capture area is started. Here, the recognition processing section 44 extracts a straight line based on the dotted points of the parallax in the parallax histogram in the x area and the y area of the predicted capture area. By doing this, the clustering can be performed on only a part of the object. Further, the recognition processing section 44 performs verification in the area where the clustering is performed. Even when the image includes only a part of the object, it becomes possible to perform verification based on the image recognition by pattern recognition, etc., and the moving speed in the X direction.

In FIG. 22C, almost all the object is imaged. At this point, the verification is completed, so that the ECU 13 can provide (perform) drive support based on the object information.

In FIG. 22D, the object exists in front of the self-vehicle. However, the ECU 13 had already started performing the drive support. Therefore, it becomes possible to present the self-vehicle from getting too close to the object.

Operation procedure

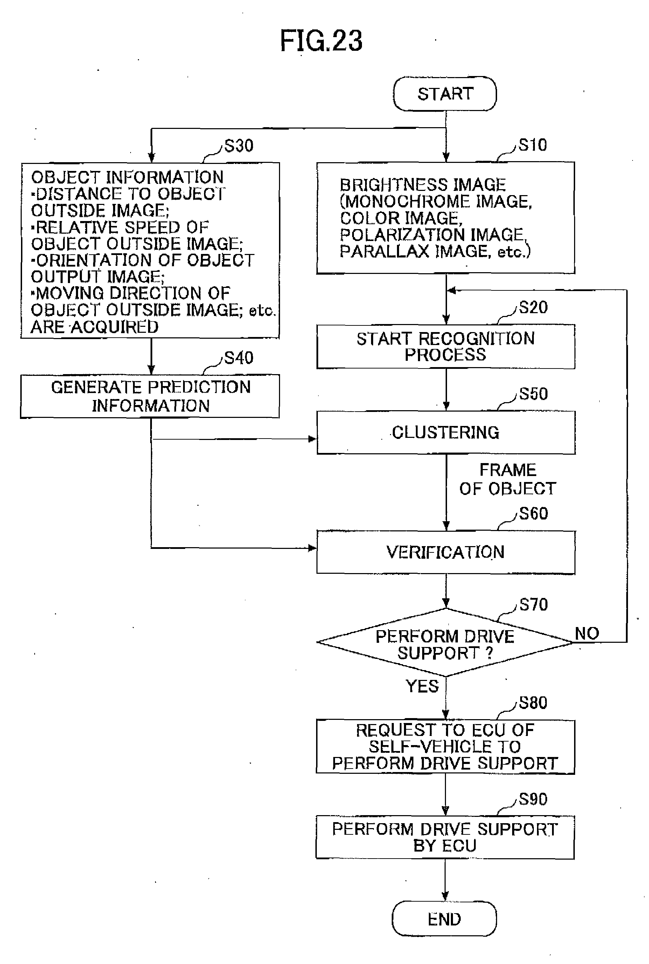

FIG. 23 is a flowchart of an example of the object recognition process performed by the recognition processing section 44.

The recognition processing section 44 periodically acquires the brightness image from the parallax calculation section 43 (step S10). The brightness image refers to, for example, a monochrome image, a color image, a polarization image, a parallax image, etc.

The recognition processing section 44 starts performing the object recognition process (step S20). Namely, the recognition processing section 44 generates the parallax histogram based on the parallax image, detects a straight line, etc.

The recognition processing section 44 periodically acquires the object information from the laser radar distance measurement sections 12 (step S30).

The recognition processing section 44 of the recognition processing section 44 generates the prediction information based on the object information (step S40). The prediction information refers to the predicted capture area and the time before imaging starts.

Next, the recognition processing section 44, performs clustering by using the prediction information (step S50). By doing this, a rectangular area including a part of the object can be detected.

The recognition processing section 44 performs verification on the object on which the clustering has performed (step S60). By doing this, even when only a part of an object is imaged, it becomes possible to classify objects as a vehicle, a bicycle, a pedestrian, etc. Further, the object information can be detected such as the distance to the object, the three dimensional coordinates, the relative speed, the moving direction, etc.

The recognition processing section 44 determines whether to provide (perform) drive support (step S70). The case to perform drive support refers to a case where, for example, the lateral position of the object overlaps with the vehicle width of the self-vehicle and the TTC is less than a threshold value.

When determining to provide (perform) drive support (YES in step S70), the recognition processing section 44 sends a request to the ECU 13 to perform drive support (step S80).

By doing this, the ECU 13 performs drive support (step S90). Therefore, it becomes possible to start performing the drive support early for an object which enters from outside the field angle.

In case of a monocular camera

In the above description, a case is described where the stereo camera 11 captures images. However, the present invention may also be applied to a case where a monocular camera captures images.

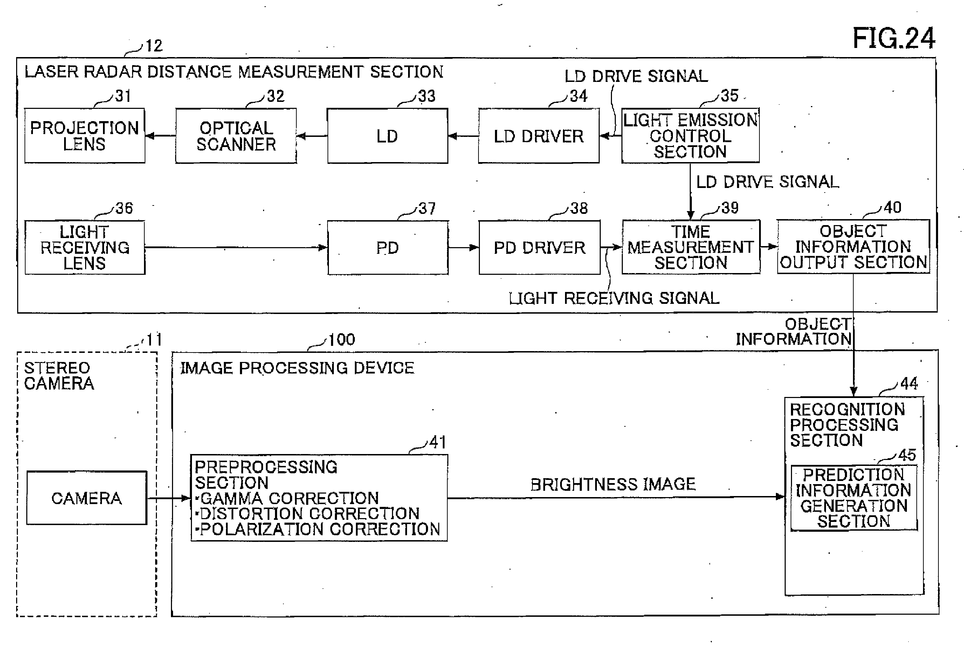

FIG. 24 is a block diagram of an example configuration of the laser radar distance measurement section 12 and the image processing device 100 when a monocular camera is used. In the following, elements which differ from those in FIG. 6 are mainly described. The image processing device 100 of FIG. 24 does not include the parallax calculation section 43. Therefore, the recognition processing section 44 does not recognize (detect) a straight line based on the histogram of the parallax values. Therefore, the clustering is not performed, either. However, the road surface area can be detected by, for example, the white-line recognition.

On the other hand, the recognition processing section 44 can perform recognition based on image recognition such as pattern recognition. Therefore, based on the image, the recognition processing section 44 can recognize a vehicle, a bicycle, a pedestrian, etc. Namely, the recognition processing section 44 can perform verification. However, the clustering is not performed. Therefore, an area (range) where an object exists is not estimated. As a result, it takes more time to complete the verification when compared with a case where the clustering is performed by using a stereo image.

The prediction information generation section 45 of FIG. 24 also generates the prediction information. However, the parallax value in the image is not used when the prediction information is generated. Therefore, the generation method is the same as that in the case of using the stereo camera 11. Further, as described above, in the verification, the image recognition process such as the pattern recognition and the moving speed in the X direction are used. Therefore, even in the case of using the monocular camera as well, the recognition processing section 44 can perform verification on a part of an object in the predicted capture area. As described, an imaging process according to this embodiment may also be applied to a case where a monocular camera is used.

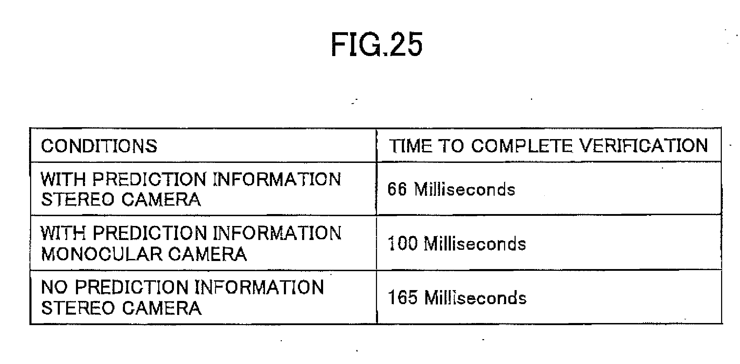

FIG. 25 illustrates an example result of experiments where the time necessary to recognize an object is measured when a condition is changed. Here, it is assumed that the imaging time interval of the camera is 30 fps. The time necessary for recognition partly depends on the imaging time interval (the number of frames per unit time). Therefore, the values in FIG. 25 are an example only.

First, a case is described where the prediction information according to this embodiment is used. When a stereo camera is used, the verification is completed in approximately 66 seconds (two frames) after the brightness image is acquired. When a monocular camera is used, the verification is completed in approximately 100 seconds (three frames).

On the other hand, in a case where the prediction information is not used, even when the stereo camera is used, it takes approximately 165 seconds (five frames) to complete the verification.

Therefore, by using the prediction information, it becomes possible to reduce the time necessary for the verification by approximately one-third. Further, in the case of the monocular camera, it becomes possible to reduce the time necessary for the verification by approximately two-thirds when compared with the case where the prediction information is not used.

As described above, in the image processing device 100 according to this embodiment, by using the image captured by an imaging means and a laser radar combinedly, it becomes possible to reduce the time which is necessary to recognize an object which suddenly appears from outside the field angle.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

For example, in the above embodiment, the image processing device 100 generates the prediction information. However, another in-vehicle device such as the laser radar distance measurement section may generate the prediction information. Further, for example, a server provided outside the vehicle and connected via a mobile telephone network, etc., may generate the prediction information.

Further, for example, the stereo camera is mounted so as to capture an image on the front side of the vehicle. However, for example, the stereo camera may be mounted so as to capture images not only on the front side but also on the rear side and the rear left and right sides of the vehicle.

Further, as the vehicle in which the image processing device 100 is mounted, not only a four-wheel vehicle but also a three-wheel vehicle and/or a truck having more than four wheels may be included. Further, the image processing device 100 according to an embodiment may be mounted on a so-called "motorcycle", or a sailing boat or a yacht.

**Claims**

1. An image processing device comprising:

   an object area extraction unit configured to extract an object area based on an image captured by an imaging unit;
   a distance information acquisition unit configured to irradiate an electromagnetic wave to an object in an area other than an imaging area of the imaging unit and acquire distance information indicating a distance to the object based on the electromagnetic wave reflected by the object; and
   an information generation unit configured to generate predicted area information based on the distance information acquired by the distance information acquisition unit,
   wherein the predicted area information is used so that the object area extraction unit extracts the object area of the object when the object, which was in the area other than the image area, enters into the imaging area.

2. The image processing device according to claim 1,
   wherein the object area extraction unit is configured to extract the object area based on determination results of plural items, and
   wherein, when the predicted area information is generated, the object area extraction unit is configured to extract the object area by reducing a number of the items when compared with a case where the predicted area information is not generated.

**3.** The image processing device according to claim 1 or 2,
wherein the object area extraction unit is configured to determine whether a pattern which is acquired by performing image processing on the image captured by the imaging unit is similar to a predetermined pattern, and, when determining that the acquired pattern is similar to the predetermined pattern, extract the object area, and
wherein, when the predicted area information is generated, the object area extraction unit is configured to extract the object area by using a pattern which is different from a pattern that is to be used when the predicted area information is not generated.

**4.** The image processing device according to claim 2 or 3,
wherein the predicted area information includes an estimated imaging area when a part of the object enters into the imaging area of the imaging unit, and
wherein the object area extraction unit is configured to perform image processing on the estimated imaging area to extract the object area.

**5.** The image processing device according to claim 4,
wherein the object area extraction unit is configured to set the estimated imaging area in a manner such that the farther the distance is, the distance being indicated by the distance information of the object area extracted by the distance information acquisition unit, the higher the estimated imaging area is set in the image captured by the imaging unit.

**6.** The image processing device according to claim 4 or 5,
wherein the information generation unit is configured to calculate a moving distance of the object from when the object is in the area other than the image area until when the object reaches the image area based on orientation information included in the distance information of the object area extracted by the distance information acquisition unit and the distance information, and calculate a time period until the object enters into the image area, and
wherein the object area extraction unit is configured to start performing image processing on the estimated imaging area to extract the object area when the time period has passed since the distance information acquisition unit acquires the distance information.

**7.** The image processing device according to any one of claims 4 through 6,
wherein the object area extraction unit is configured to detect a road surface area based on a distance image which is captured by the imaging unit that is capable of acquiring the distance information, perform detection on a pixel area having a distance thereto shorter than a distance to the road surface area to detect a candidate area having similar distances from the detected pixel area, and perform image processing on the candidate area to extract the object area, and
wherein when the predicted area information is generated, the object area extraction unit is further configured to perform detection on the estimated imaging area to detect the candidate area of the pixel area having a distance thereto shorter than a distance to the road surface area, and perform image processing on the candidate area to extract the object area.

**8.** The image processing device according to claim 7,
wherein the object area extraction unit is configured to perform a detection process on the estimated imaging area to detect a straight line which is a set of dots having similar distances, detect the candidate area having similar distances based on a position of the detected straight line, and perform image processing on the candidate area to extract the object area.

**9.** The image processing device according to claim 8,
wherein the object area extraction unit is' configured to determine whether inclination of the straight line which is detected when the estimated imaging area is set at a right end of the image captured by the imaging unit differs from inclination of the straight line which is detected when the estimated imaging area is set at a left end of the image captured by the imaging unit,
wherein when the straight line is detected at a left end of the estimated imaging area, the object area extraction unit is configured to perform processing to extract the object area of an object approaching from a left rear side, and
wherein when the straight line is detected at a right end of the estimated imaging area, the object area extraction unit is configured to perform processing to extract the object area of an object approaching from a right rear side.

**10.** The image processing device according to claim 7 or 8,
wherein the object area extraction unit is configured to extract the object area imaged in the candidate area based on an aspect ratio applied to the candidate area and at least one of height of the candidate area from a road surface, an image recognition process by pattern recognition and a moving speed, and
wherein when the predicted area information is generated, the object area extraction unit is further configured to extract the object area imaged in the candidate area without using the aspect ratio and the height from the road surface.

11. A drive support system which provides drive support by performing processing on an image captured by an imaging unit, the drive support system comprising:

an object area extraction unit configured to extract an object area based on the image captured by the imaging unit;
a distance information acquisition unit configured to irradiate an electromagnetic wave to an object in an area other than an imaging area of the imaging unit and acquire distance information indicating a distance to the object based on the electromagnetic wave reflected by the object;
an information generation unit configured to generate predicted area information based on the distance information acquired by the distance information acquisition unit, wherein the predicted area information is used so that the object area extraction unit extracts the object area of the object when the object, which was in the area other than the image area, enters into the imaging area; and
a drive support unit configured to perform drive support based on the distance information of the object area.

12. An image processing method comprising:

extracting, by an object area extraction unit, an object area based on an image captured by the imaging unit;
irradiating, by a distance information acquisition unit, an electromagnetic wave to an object in an area other than an imaging area of the imaging unit;
acquiring, by the distance information acquisition unit, distance information indicating a distance to the object based on the electromagnetic wave reflected by the object; and
generating, by an information generation unit, predicted area information based on the distance information acquired in the acquiring,
wherein the predicted area information is used so that the object area extraction unit extracts the object area of the object when the object, which was in the area other than the image area, enters into the imaging area.

13. A program causing a computer to execute an image processing method comprising:

extracting, by an object area extraction unit, an object area based on an image captured by the imaging unit;
irradiating, by a distance information acquisition unit, an electromagnetic wave to an object in an area other than an imaging area of the imaging unit;
acquiring, by the distance information acquisition unit, distance information indicating a distance to the object based on the electromagnetic wave reflected by the object; and
generating, by an information generation unit, predicted area information based on the distance information acquired in the acquiring,
wherein the predicted area information is used so that the object area extraction unit extracts the object area of the object when the object, which was in the area other than the image area, enters into the imaging area.

FIG.1A

FIG.1B

FIG.1C

FIG.1D

## FIG.2A

LASER LIGHT

12
LASER RADAR DISTANCE MEASUREMENT SECTION

OBJECT INFORMATION

100
IMAGE PROCESSING DEVICE

PREDICTION INFORMATION GENERATION

## FIG.2B

PREDICT IN THIS RANGE

# FIG.3

STEREO CAMERA
11

12
LASER RADAR DISTANCE
MEASUREMENT SECTIONS

# FIG.4

DETECT CROSSING, CUT IN,
PASSING, ETC. BY VEHICLE,
PERSON, etc.

VEHICLE,
PERSON,
etc.

12

11

12

# FIG.5

EP 2 921 992 A2

# FIG.6

EP 2 921 992 A2

# FIG.7

# FIG.8A

# FIG.8B

## FIG.9A

## FIG.9B

# FIG.10

| TIME | DISTANCE L [m] | RELATIVE SPEED Vd [m/s] | ORIENTATION $\theta$ [°] | COORDINATES (X,Y,Z) | MOVING DIRECTION [APPROACHING/SEPARATING] |
|---|---|---|---|---|---|
| t1 | 30 | 5 | 0 | (1,1,30) | APPROACHING |
| t2 | 27 | 5 | 0 | (1,1,27) | APPROACHING |
| t3 | 24 | 5 | 0 | (1,1,24) | APPROACHING |
| t4 | 21 | 5 | 0 | (1,1,21) | APPROACHING |
| t5 | 18 | 5 | 0 | (1,1,18) | APPROACHING |
| : | : | : | : | : | : |

EP 2 921 992 A2

# FIG.11

SAME PARALLAX $d_3$

SAME PARALLAX $d_2$

SAME PARALLAX $d_1$

Y COORDINATE

POSSIBLE TO BE APPROXIMATED BY STRAIGHT LINE

$d_3$     $d_2$     $d_1$     PARALLAX (d)

EP 2 921 992 A2

EP 2 921 992 A2

FIG.12A

FIG.12B

# FIG.13

(a)

PARALLAX
CHANGES

PEAK DUE
TO OBJECT

PARALLAX (d)

(b)

xxxxxx

X COORDINATE

FIG.14

# FIG.15

# FIG.16

| DISTANCE L [m] | PREDICTED IMAGE POSITION (COUNTED FROM LOWER PART OF IMAGE) |
|---|---|
| 0~2 | a~b PIXELS |
| 2~5 | b~c PIXELS |
| 5~10 | c~d PIXELS |
| 10~15 | d~e PIXELS |
| 15~20 | e~f |
| 20~30 | f~g |
| 30 OR MORE | g~h |

EP 2 921 992 A2

# FIG.17

e.g. 50 cm/FRAME

ESTIMATION

IMAGE

$V_x = 50[km/h]$
$\simeq 14[m/sec]$

11

12

12

# FIG.18

Y COORDINATE

PARALLAX (d)

PARALLAX (d)

X COORDINATE

FIG.19

FIG.20

EP 2 921 992 A2

FIG.21

**FIG.22A**

IMAGE (TIME:T1)

**FIG.22B**

IMAGE (TIME:T2)

PREDICTED
IMAGE
POSITION

**FIG.22C**

IMAGE (TIME:T3)

VERIFICATION
COMPLETED,
SO DRIVE SUPPORT
CAN BE PROVIDED

**FIG.22D**

IMAGE (TIME:T4)

PREVENT
COLLISION

# FIG.23

```
                                        ┌──────────┐
                                        │  START   │
                                        └──────────┘
                                             │
        ┌────────────┐S30                    │        ┌────────────┐S10
        ▼                                    ▼
┌─────────────────────────┐      ┌─────────────────────────────┐
│ OBJECT INFORMATION      │      │ BRIGHTNESS IMAGE            │
│ ·DISTANCE TO OBJECT     │      │ (MONOCHROME IMAGE,          │
│ OUTSIDE IMAGE;          │      │ COLOR IMAGE,                │
│ ·RELATIVE SPEED OF      │      │ POLARIZATION IMAGE,         │
│ OBJECT OUTSIDE IMAGE;   │      │ PARALLAX IMAGE, etc.)       │
│ ·ORIENTATION OF OBJECT  │      └─────────────────────────────┘
│ OUTPUT IMAGE;           │                   │
│ ·MOVING DIRECTION OF    │                   ▼        S20
│ OBJECT OUTSIDE IMAGE; etc.│    ┌─────────────────────────────┐
│ ARE ACQUIRED            │      │ START RECOGNITION           │
└─────────────────────────┘      │ PROCESS                     │
          │         S40          └─────────────────────────────┘
          ▼                                   │
┌─────────────────────────┐                   ▼        S50
│ GENERATE PREDICTION     │      ┌─────────────────────────────┐
│ INFORMATION             │      │ CLUSTERING                  │
└─────────────────────────┘      └─────────────────────────────┘
          │                                   │  FRAME
          │                                   │  OF OBJECT
          │                                   ▼        S60
          └──────────────────────►┌─────────────────────────────┐
                                   │ VERIFICATION                │
                                   └─────────────────────────────┘
                                                │        S70
                                                ▼
                                        ◇ PERFORM DRIVE ◇  NO
                                        ◇ SUPPORT ?     ◇──────►
                                                │
                                             YES│        S80
                                                ▼
                                   ┌─────────────────────────────┐
                                   │ REQUEST TO ECU OF           │
                                   │ SELF-VEHICLE TO             │
                                   │ PERFORM DRIVE SUPPORT       │
                                   └─────────────────────────────┘
                                                │        S90
                                                ▼
                                   ┌─────────────────────────────┐
                                   │ PERFORM DRIVE SUPPORT       │
                                   │ BY ECU                      │
                                   └─────────────────────────────┘
                                                │
                                                ▼
                                        ┌──────────┐
                                        │   END    │
                                        └──────────┘
```

# FIG.24

**LASER RADAR DISTANCE MEASUREMENT SECTION** /12

LD DRIVE SIGNAL

| /31 PROJECTION LENS | ← | /32 OPTICAL SCANNER | ← | /33 LD | ← | /34 LD DRIVER | ← | /35 LIGHT EMISSION CONTROL SECTION |

LD DRIVE SIGNAL

| /36 LIGHT RECEIVING LENS | → | /37 PD | → | /38 PD DRIVER | → | /39 TIME MEASUREMENT SECTION | → | /40 OBJECT INFORMATION OUTPUT SECTION |

LIGHT RECEIVING SIGNAL

OBJECT INFORMATION

**STEREO CAMERA** /11

**IMAGE PROCESSING DEVICE** /100

CAMERA → /41 PREPROCESSING SECTION ·GAMMA CORRECTION ·DISTORTION CORRECTION ·POLARIZATION CORRECTION → BRIGHTNESS IMAGE → /44 RECOGNITION PROCESSING SECTION

/45 PREDICTION INFORMATION GENERATION SECTION

# FIG.25

| CONDITIONS | TIME TO COMPLETE VERIFICATION |
|---|---|
| WITH PREDICTION INFORMATION STEREO CAMERA | 66 Milliseconds |
| WITH PREDICTION INFORMATION MONOCULAR CAMERA | 100 Milliseconds |
| NO PREDICTION INFORMATION STEREO CAMERA | 165 Milliseconds |

EP 2 921 992 A2

**EP 2 921 992 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013215804 A